# EUROPEAN PATENT APPLICATION

(11) **EP 1 662 209 A1**
(43) Date of publication of application: **31.05.2006**
(21) Application number: 04770852.4
(22) Date of filing: 21.07.2004
(51) Int. Cl.: F24F 3/147, F25B 1/00, B01D 53/26

(54) **MOISTURE CONDITIONER**

(30) Priority: 22.07.2003 JP 2003277468
(71) Applicant: DAIKIN INDUSTRIES, LTD., Osaka-shi, Osaka 530-8323 (JP)
(72) Inventor: YABU, Tomohiro,Kanaoka Factory,Sakai Plant, Sakai-shi, Osaka 591-8511 (JP); ISHIDA, Satoshi,Kanaoka Factory,Sakai Plant, Sakai-shi, Osaka 591-8511 (JP)
(74) Representative: HOFFMANN EITLE
(86) International application number: PCT/JP2004/010342
(87) International publication number: WO 2005/008140

(57) **Abstract**

The amount of heat for thermal regeneration of an adsorber (**80**) is increased by making the sensible heat zone (**R**) for refrigerant (**106**) in a refrigeration cycle larger than that for R22.

## Description

### Technical Field

This invention relates to humidity control systems for dehumidifying and humidifying air by means of an adsorber.

### Background Art

Known humidity control systems for controlling the temperature and humidity of room air include desiccant humidity control systems using the action of moisture adsorption of desiccants.

For example, a desiccant humidity control system comprises an adsorption element for adsorbing and desorbing moisture in room air and a refrigerant circuit for controlling the temperature of room air. Room air let in the desiccant humidity control system is humidified or dehumidified by the adsorption element and heated or cooled by a heat exchanger in the refrigerant circuit. The adsorption element having adsorbed moisture is thermally regenerated to recover its adsorption capacity.

The adsorption element of the desiccant humidity control system is composed of a first adsorption element and a second adsorption element. In dehumidifying room air, for example, in summer, the desiccant humidity control system adsorbs moisture in room air on the first adsorption element and, during the time, thermally regenerates the second adsorption element. Then, after a predetermined time has passed, the desiccant humidity control system adsorbs moisture in room air on the second adsorption element and, during the time, thermally regenerates the first adsorption element. In other words, the desiccant humidity control system operates the first and second adsorption elements so that both the elements alternately undergo two behaviors of moisture adsorption and thermal regeneration while changing off with each other (operates in batches). Thus, the desiccant humidity control system continuously controls the humidity of room air without deteriorating dehumidification performance.

The refrigerant circuit of the desiccant humidity control system essentially consists of a compressor, a regeneration heat exchanger for regenerating the adsorption element, an expansion mechanism, and a heat exchanger for heating and cooling room air. The compressor, the heat exchangers and the expansion mechanism are connected to each other via piping. The refrigerant circuit operates on a refrigeration cycle by changing the state of refrigerant charged in the piping while the refrigerant circulates in the piping. In the refrigeration cycle, heat of condensation of refrigerant in the regeneration heat exchanger is used, for example, during thermal regeneration of the adsorption element (see for example, Japanese Unexamined Patent Publication No. 2003-97825).

### ― Problems to Be Solved ―

With the above known humidity control system, however, the refrigeration cycle of the refrigerant circuit may lack the amount of heat for thermal regeneration of the adsorption element. Particularly, if the refrigerant used in the refrigerant circuit is R22 (CHC1F2), which is a refrigerant commonly used in known humidity control systems, a sufficient amount of heat cannot be obtained for thermal regeneration of the adsorption element. As a result, there may arise a problem that the humidity control system deteriorates its humidity control performance.

The present invention has been made in view of the above points and, therefore, its object is to extensively increase the amount of heat for thermal regeneration of the adsorption element in the refrigerant circuit of the humidity control system to improve the efficiency of regeneration of the adsorption element and thereby enhance the humidity control performance of the humidity control system.

### Disclosure of the Invention

The present invention intends to increase the amount of heat for thermal regeneration of an adsorber (**80**) by providing a large sensible heat zone (**R**) for refrigerant (**106**) in a refrigeration cycle.

Specifically, a first aspect of the invention is directed to a humidity control system which includes an adsorber (**80**) for controlling the humidity of air to be processed using an adsorbent and a refrigerant circuit (**100**) for operating on a refrigeration cycle and thermally regenerates the adsorber (**80**) with heat of refrigerant (**106**) in the refrigerant circuit (**100**).

Further, the humidity control system is characterized by being configured so that the sensible heat zone (**R**) for the refrigerant (**106**) is larger than that for R22 when compared in terms of refrigeration cycles having substantially the same discharge temperature (**B**). The discharge temperature (**B**) refers to the temperature of refrigerant discharged from the compressor after undergoing a compression stroke in the compressor.

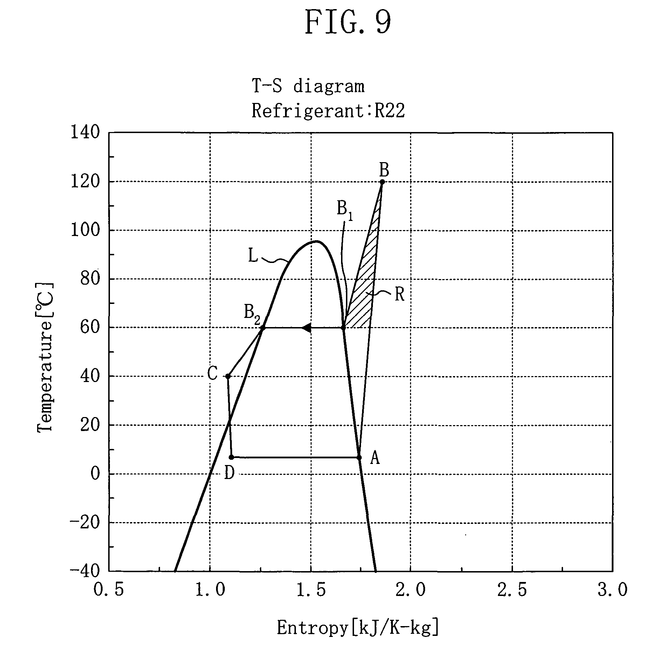

In the first aspect of the invention, the adsorber (**80**) is thermally regenerated with heat of the refrigerant (**106**) in a refrigeration cycle. Here, the refrigerant (**106**) used for thermal regeneration of the adsorber (**80**) is refrigerant (**106**) having a larger sensible heat zone (**R**) than R22, which is a commonly known refrigerant, when they are compared in terms of their refrigeration cycles having substantially the same discharge temperature (**B**). The sensible heat zone (**R**) will be described with reference to Figure **9**.

Figure **9** shows a T-S diagram showing a refrigeration cycle using R22 which is a commonly known refrigerant. The T-S diagram indicates changes of state of R22 in the refrigeration cycle by laying off temperatures of the refrigerant as ordinates and entropies thereof as abscissas. The curve L is the saturation curve (saturation liquid line and saturation vapor line) of R22.

The refrigerant circuit using R22 operates on a refrigeration cycle shown roughly in the loop A→B→C→D. In this refrigeration cycle, thermal regeneration of an adsorption element is implemented out by heat release of R22 in the period from Point B to C. If the temperature required for thermal regeneration of the adsorption element is, for example, 60°C, R22 needs to release heat at a higher temperature than 60°C. Therefore, the sensible heat zone (R) for R22 effective for thermal regeneration of the adsorption element in the period from Point B to C is the hatched area from the level at 60°C to the point at approximately 120°C which is the discharge temperature (**B**) in the refrigeration cycle. The hatched area indicates the state of refrigerant effectively acting on thermal regeneration of the adsorption element and the area is defined herein as the sensible heat zone (**R**) cited in "Claims". Since the sensible heat zone (**R**) shows the area obtained from the refrigerant temperature and entropy, the wider the sensible heat zone (**R**) is, the larger the amount of heat release for thermal regeneration of the adsorption element becomes.

In the present invention, the sensible heat zone (**R**) for the refrigerant (**106**) is made larger than that for R22, which is a refrigerant commonly used for known humidity control systems, when they are compared in terms of their refrigeration cycles having the same discharge temperature (**B**). Therefore, the refrigerant (**106**) in the refrigerant circuit (**100**) can increase the amount of heat released to thermally regenerate the adsorber (**80**). This enhances the efficiency of thermal regeneration of the adsorber (**80**).

A second aspect of the invention is characterized in that in the humidity control system of the first aspect, the refrigerant circuit (**100**) is configured so that the pressure of the refrigerant (**106**) in the high-pressure side of the refrigeration cycle is higher than the critical pressure of the refrigerant (**106**).

In the second aspect, the pressure of the refrigerant (**106**) in the high-pressure side of the refrigerant circuit (**100**) during thermal regeneration of the adsorber (**80**) is made higher than the critical pressure of the refrigerant (**106**) to put the refrigerant (**106**) into a supercritical state. Further, the adsorber (**80**) is thermally regenerated using a refrigeration cycle in a supercritical state (a supercritical cycle). When the refrigerant (**106**) is put into a supercritical state, the sensible heat zone (**R**) for the refrigerant (**106**) is made larger than that for refrigerant in liquid or gas form (in a subcritical state). Therefore, the amount of heat release for thermal regeneration of the adsorber (**80**) can be increased.

A third aspect of the invention is characterized in that in the humidity control system of the first or second aspect, the refrigerant (**106**) is a single refrigerant of R32 or a mixed refrigerant containing R32 in the range from 75 weight % inclusive to 100 weight % exclusive.

In the third aspect, R32 (CH2F2)-rich refrigerant having a larger sensible heat zone (**R**) than R22 is used as the refrigerant (**106**) in the refrigerant circuit (**100**). Therefore, the amount of heat release for thermal regeneration of the adsorber (**80**) can be increased.

A fourth aspect of the invention is characterized in that in the humidity control system of the second aspect, the refrigerant (**106**) is CO2 refrigerant.

In the fourth aspect, CO2 having a low critical temperature is used as the refrigerant (**106**) in the refrigerant circuit (**100**). Thus, the refrigerant (**106**) can be easily put into a supercritical state, which increases the sensible heat zone (**R**) for the refrigerant (**106**). Therefore, the amount of heat release for thermal regeneration of the adsorber (**80**) can be increased.

A fifth aspect of the invention is characterized in that in the humidity control system of any one of the first to fourth aspects, the adsorber (**80**) is composed of a first adsorption element (**81**) and a second adsorption element (**82**), and the humidity control system is configured to run a batch operation consisting of a first behavior in which the first adsorption element (**81**) adsorbs moisture in a first air and the second adsorption element (**82**) is regenerated by heating with a second air heated up by the refrigerant (**106**) in the refrigerant circuit (**100**) and a second behavior in which the second adsorption element (**82**) adsorbs moisture in the first air and the first adsorption element (**81**) is regenerated by heating with the second air heated up by the refrigerant (**106**) in the refrigerant circuit (**100**) by alternately switching between the first and second behaviors.

In the fifth aspect, moisture in the first air is adsorbed on the adsorber (**80**) while the second air is used for thermal regeneration of the adsorber (**80**). The adsorber (**80**) is composed of a first adsorption element (**81**) and a second adsorption element (**82**) and the humidity control system runs a batch operation consisting of first and second behaviors in which one adsorption element adsorbs moisture in the first air and concurrently the other adsorption element is thermally regenerated by the second air heated up by the refrigerant (**106**) by alternately switching between the first and second behaviors. Therefore, the humidity of the air to be processed can be continuously controlled without adsorption breakthrough of the first and second adsorption elements (**81**, **82**).

### ― Effects ―

In the first aspect of the invention, the refrigerant (**106**) used for thermal regeneration of the adsorber (**80**) is refrigerant (**106**) having a larger sensible heat zone (**R**) than R22 when they are compared in terms of their refrigeration cycles having the same discharge temperature (**B**). Therefore, the amount of heat release of the refrigerant (**106**) can be increased to improve the efficiency of regeneration of the adsorber (**80**). Therefore, the humidity control performance of the humidity control system can be enhanced.

In the second aspect of the invention, the pressure of the refrigerant (**106**) in the high-pressure side of the refrigerant circuit (**100**) during a refrigeration cycle is made higher than the critical pressure of the refrigerant (**106**) to put the refrigerant (**106**) into a supercritical state. Further, the adsorber (**80**) is thermally regenerated using a supercritical cycle of the refrigerant (**106**). When the refrigerant (**106**) is put into a supercritical state, the sensible heat zone (**R**) for the refrigerant (**106**) is made larger than that for refrigerant in a subcritical state. Therefore, the amount of heat release for thermal regeneration of the adsorber (**80**) can be increased thereby improving the efficiency of regeneration of the adsorber (**80**).

In the third aspect of the invention, R32-rich refrigerant is used as the refrigerant (**106**) for thermal regeneration of the adsorber (**80**). Since R32 has a larger sensible heat zone (**R**) in a regeneration cycle than R22, the amount of heat release from the refrigerant (**106**) can be increased thereby improving the efficiency of regeneration of the adsorber (**80**).

In the fourth aspect of the invention, CO2 is used as the refrigerant (**106**) for thermal regeneration of the adsorber (**80**) and the refrigerant circuit (**100**) operates on a supercritical cycle of CO2. Since CO2 has a low critical temperature, the refrigerant (**106**) can be easily put into a supercritical state. Putting CO2 into a supercritical state increases the sensible heat zone (**R**) for the refrigerant (**106**). Therefore, the amount of heat release for thermal regeneration of the adsorber (**80**) can be increased to further improve the efficiency of regeneration of the adsorber (**80**). Therefore, the humidity control performance of the humidity control system can be further enhanced.

In the fifth aspect of the invention, the adsorber (**80**) is composed of first and second adsorption elements (**81**, **82**) and the humidity control system runs a batch operation consisting of first and second behaviors in which one adsorption element adsorbs moisture in air and concurrently the other adsorption element is thermally regenerated by alternately switching between the first and second behaviors. Therefore, the humidity of the air to be processed can be continuously controlled without adsorption breakthrough of the first and second adsorption elements (**81**, **82**), thereby improving the dehumidification performance of the humidity control system.

### Brief Description of the Drawings

[Fig. 1] Figure **1** is a schematic structural diagram showing the structure of a humidity control system according to a first embodiment of the invention and the air flow in a first behavior during dehumidification. Figures **1A, 1B** and **1C** show top, left side and right side views, respectively, of the humidity control system.
[Fig. 2] Figure **2** is a schematic structural diagram showing the structure of the humidity control system according to the first embodiment and the air flow in a second behavior during dehumidification. Figures **2A**, **2B** and **2C** show top, left side and right side views, respectively, of the humidity control system.
[Fig. 3] Figure **3** is a schematic structural diagram showing the structure of the humidity control system according to the first embodiment and the air flow in a first behavior during humidification. Figures **3A**, **3B** and **3C** show top, left side and right side views, respectively, of the humidity control system.
[Fig. 4] Figure **4** is a schematic structural diagram showing the structure of the humidity control system according to the first embodiment and the air flow in a second behavior during humidification. Figures **4A**, **4B** and **4C** show top, left side and right side views, respectively, of the humidity control system.
[Fig. 5] Figure **5** is an enlarged view of an essential part of the humidity control system according to the first embodiment.
[Fig. 6] Figure **6** is a schematic perspective view showing the structure of an adsorption element of the humidity control system according to the first embodiment.
[Fig. 7] Figure **7** is a circuit diagram of a refrigerant circuit according to the first embodiment.
[Fig. 8] Figures **8A** and **8B** are a schematic block diagram showing the operation of the refrigerant circuit during dehumidification and a schematic block diagram showing the operation of the refrigerant circuit during humidification.
[Fig. 9] Figure **9** is a T-S diagram showing an example of a refrigeration cycle using R22 as refrigerant in the refrigerant circuit.
[Fig. 10] Figure **10** is a T-S diagram showing an example of a refrigeration cycle using R32 as refrigerant in the refrigerant circuit.
[Fig. 11] Figure **11** is a T-S diagram showing an example of a refrigeration cycle (a supercritical cycle) using CO2 as refrigerant in the refrigerant circuit.
[Fig. 12] Figure **12** is a perspective view of an adsorption heat exchanger used in a humidity control system according to a second embodiment of the invention.
[Fig. 13] Figure **13** is a schematic structural diagram of the humidity control system according to the second embodiment.
[Fig. 14] Figure **14** is a circuit diagram of a refrigerant circuit according to the second embodiment.
[Fig. 15] Figure **15** is a schematic structural diagram showing the structure of the humidity control system according to the second embodiment and the air flow in a first behavior during dehumidification.
[Fig. 16] Figure **16** is a schematic structural diagram showing the structure of the humidity control system according to the second embodiment and the air flow in a second behavior during dehumidification.
[Fig. 17] Figure **17** is a schematic structural diagram showing the structure of the humidity control system according to the second embodiment and the air flow in a first behavior during humidification.
[Fig. 18] Figure **18** is a schematic structural diagram showing the structure of the humidity control system according to the second embodiment and the air flow in a second behavior during humidification.

### Best Mode for Carrying Out the Invention

Humidity control systems according to embodiments of the present invention will be described below in detail with reference to the drawings.

### <<Embodiment 1 of the Invention>>

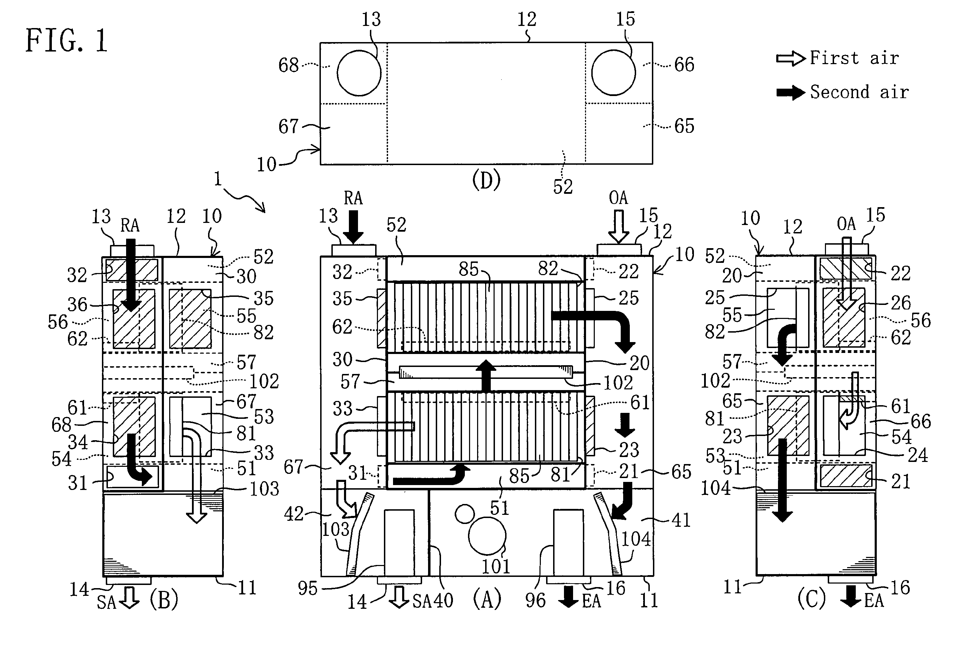

A description will be made first of a humidity control system according to a first embodiment of the present invention. The humidity control system according to the first embodiment is configured to operate to switch between a dehumidification mode for supplying a dehumidified air to a room and a humidification mode for supplying a humidified air to the room. Further, the humidity control system comprises an adsorber (**80**) and a refrigerant circuit (**100**) described in detail later and is configured to run a batch operation. The structure of the humidity control system according to this embodiment will be described here with reference to Figures **1**, **5** and **6**. In the description of this embodiment, "upper", "lower", "left", "right", "front", "rear" "in front" and "behind" refer to directionalities when the humidity control system shown in Figure **1** is viewed from in front, unless otherwise specified.

As shown in Figure **1,** the humidity control system has a flattish rectangular casing (1**0**). The casing (**10**) contains two absorption elements (**81**, **82**) serving as the above absorber (**80**) and a refrigerant circuit (**100**).

The refrigerant circuit (**100**) is provided with a regeneration heat exchanger (**102**), a first heat exchanger (**103**), a second heat exchanger (**104**), a compressor (**101**) and expansion valves (first and second motor-operated expansion valves) (**121**, **122**). The refrigerant circuit (**100**) operates on a refrigeration cycle by circulating refrigerant (**106**) charged in the refrigerant circuit (**100**) therethrough. The refrigerant circuit (**100**) is configured to be switchable from an operation mode in which the first heat exchanger (**103**) acts as an evaporator to an operation mode in which the second heat exchanger (**104**) acts as an evaporator or vice versa.

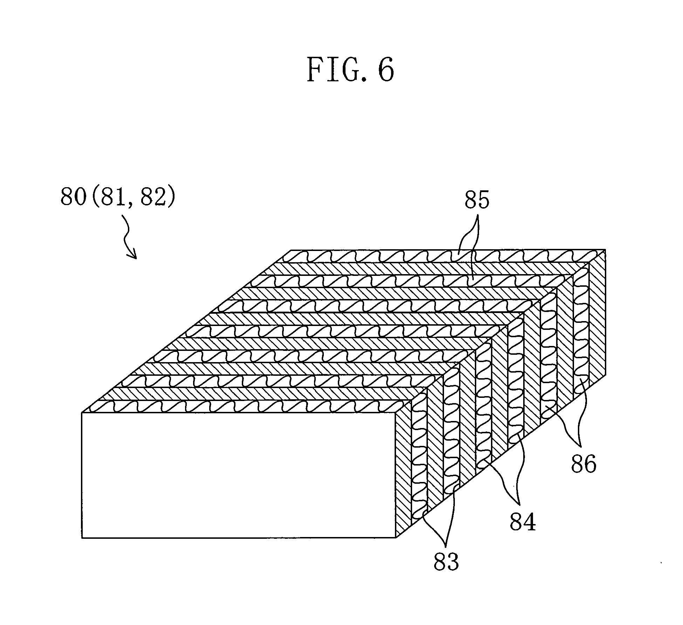

As shown in Figure **6**, each adsorption element (**81**, **82**) is formed by alternately stacking flat plate members **(83)** and corrugated plate members (**84**). The corrugated plate members (**84**) are stacked in such positions that the directions of ridges of each adjacent two are shifted 90 degrees from each other. Each adsorption element (**81**, **82**) is generally formed in a rectangular parallelepiped or a quadratic prism.

In each adsorption element (**81**, **82**), humidity control passages (**85**) and cooling passages (**86**) are alternately defined in the stacking direction of the flat plate members (**83**) and the corrugated plate members (**84**) with one flat plate member (**83**) interposed between each adjacent pair of the humidity control passage (**85**) and the cooling passage (**86**). The humidity control passages (**85**) are open at sides of each adsorption element (**81**, **82**) in which the long sides of the flat plate members (**83**) exist, while the cooling passages (**86**) are open at sides of each adsorption element (**81**, **82**) in which the short sides of the flat plate members (**83**) exist.

In each adsorption element (**81**, **82**), an adsorbent for adsorbing water vapor is applied to the surfaces of the flat plate members (**83**) facing the humidity control passages (**85**) and the surfaces of the corrugated plate members (**84**) placed on the humidity control passages (**85**). Adsorbents of such kind include silica gel, zeolite and ion-exchange resin.

As shown in Figure **1**, the casing (**10**) is formed at the forefront by a first panel (**11**) and at the rearmost by a second panel (**12**). A lower part of the first panel (**11**) is formed toward the left end with an intake port (**14**) and formed toward the right end with an exhaust port (**16**). On the other hand, a lower part of the second panel (**12**) is formed toward the left end with an indoor suction port (**13**) and formed toward the right end with an outdoor suction port (**15**).

The interior of the casing (**10**) is roughly divided into two spaces in the direction from the front-side first panel (**11**) to the rear-side second panel (**12**).

The space of the casing (**10**) formed toward the first panel (**11**) is further divided into right and left spaces by a partition plate (**40**). Of the right and left spaces, the right space forms an exhaust channel (**41**) and the left space forms an intake channel (**42**).

The exhaust channel (**41**) communicates with the outside of the room through the exhaust port (**16**). The exhaust channel (**41**) is provided with an exhaust fan (**96**), the second heat exchanger (**104**) and the compressor (**101**). The second heat exchanger (**104**) exchanges heat between air flowing toward the exhaust fan (**96**) and refrigerant (**106**) in the refrigerant circuit (**100**). The compressor (**101**) is used in the compression stroke of the refrigerant circuit (**100**).

On the other hand, the intake channel (**42**) communicates with the room through the intake port (**14**). The intake channel (**42**) is provided with an intake fan (**95**) and the first heat exchanger (**103**). The first heat exchanger (**103**) exchanges heat between air flowing toward the intake fan (**95**) and refrigerant (**106**) in the refrigerant circuit (**100**).

The space of the casing (**10**) formed toward the second panel (**12**) is further divided into three spaces, one to the right or left of another, by a right partition plate (**20**) and a left partition plate (**30**).

The space to the right of the right partition plate (**20**) is further divided into two spaces one above the other. Out of these two spaces, the upper space forms a upper right channel (**65**) and the lower space forms a lower right channel (**66**). The upper right channel (**65**) communicates with the exhaust channel (**41**) but is divided off from the outdoor suction port (**15**). On the other hand, the lower right channel (**66**) communicates with the outdoor suction port (**15**) but is divided off from the exhaust channel (**41**).

The space to the left of the left partition plate (**30**) is further divided into two spaces one above the other. Out of these two spaces, the upper space forms an upper left channel (**67**) and the lower space forms a lower left channel (**68**). The upper left channel (**67**) communicates with the intake channel (**42**) but is divided off from the indoor suction port (**13**). On the other hand, the lower left channel (**68**) communicates with the indoor suction port (**13**) but is divided off from the intake channel (**42**).

The two adsorption elements (**81**, **82**) are placed between the right partition plate (**20**) and the left partition plate (**30**). These adsorption elements (**81**, **82**) are arranged in the front-to-rear direction with a predetermined distance apart from each other. Specifically, the first adsorption element (**81**) is placed toward the front, i.e., toward the first panel (**11**) and the second adsorption element (**82**) is placed toward the rear, i.e., toward the second panel (**12**).

The first and second adsorption elements (**81**, **82**) are placed in positions that the stacking direction of the flat plate members (**83**) and the corrugated plate members (**84**) coincides with the right-to-left direction of the casing (**10**). In these positions, the humidity control passages (**85**) are open at the top and bottom sides of each adsorption element (**81**, **82**), the cooling passages (**86**) are open at the front and rear sides thereof, but neither humidity control passages (**85**) nor cooling passages (**86**) are open at the right and left sides thereof.

The space between the right partition plate (**20**) and the left partition plate (**30**) is divided into a first channel (**51**), a second channel (**52**), a first upper channel (**53**), a first lower channel (**54**), a second upper channel (**55**), a second lower channel (**56**) and a middle channel (**57**).

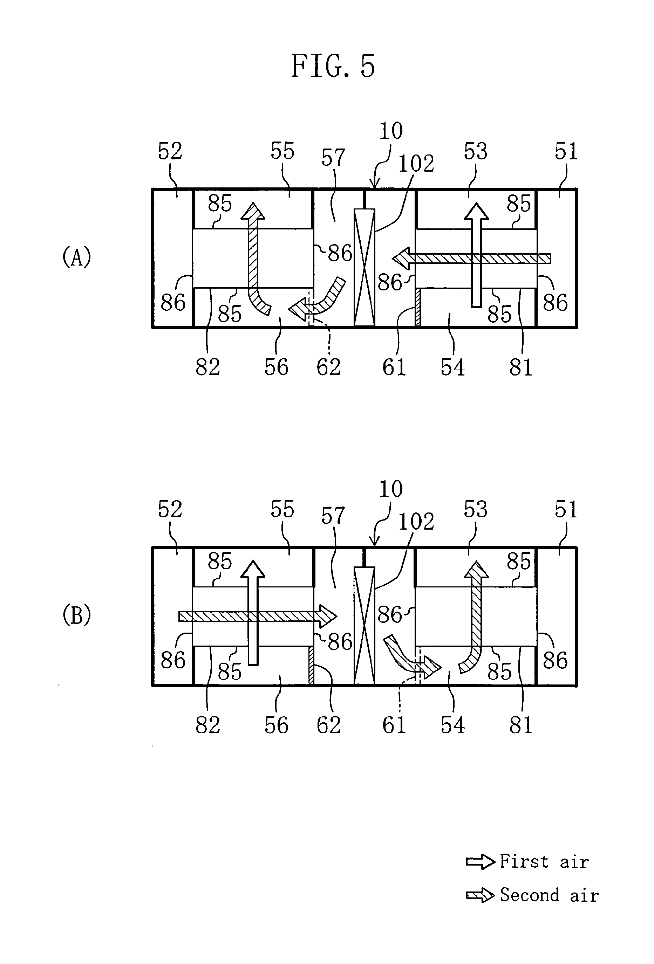

Further, as shown in Figure **5**, the first channel (**51**) is formed in front of the first adsorption element (**81**) (to the right thereof in Figure **5**) and communicates with the cooling passages (**86**) of the first adsorption element (**81**). The second channel (**52**) is formed behind the second adsorption element (**82**) (to the left thereof in Figure **5**) and communicates with the cooling passages (**86**) of the second adsorption element (**82**).

The first upper channel (**53**) is formed on top of the first adsorption element (**81**) and communicates with the humidity control passages (**85**) of the first adsorption element (**81**). The first lower channel (**54**) is formed under the first adsorption element (**81**) and communicates with the humidity control passages (**85**) of the first adsorption element (**81**). The second upper channel (**55**) is formed on top of the second adsorption element (**82**) and communicates with the humidity control passages (**85**) of the second adsorption element (**82**). The second lower channel (**56**) is formed under the second adsorption element (**82**) and communicates with the humidity control passages (**85**) of the second adsorption element (**82**).

The middle channel (**57**) is formed between the first adsorption element (**81**) and the second adsorption element (**82**) and communicates with the cooling passages (**86**) of both the adsorption elements (**81**, **82**). The regeneration heat exchanger (**102**) for thermally regenerating the first and second adsorption elements is placed in a substantially upright position in the middle channel (**57**). The regeneration heat exchanger (**102**) exchanges heat between air flowing through the middle channel (**57**) and refrigerant (**106**) in the refrigerant circuit (**100**). The regeneration heat exchanger (**102**) also functions as a condenser to heat air flowing through the middle channel (**57**).

A first shutter (**61**) is placed as a partition between the middle channel (**57**) and the first lower channel (**54**). On the other hand, a second shutter (**62**) is placed as a partition between the middle channel (**57**) and the second lower channel (**56**). Both the first shutter (**61**) and the second shutter (**62**) are configured to freely open and close.

As shown in Figure **1,** the right partition plate (**20**) is formed with a first right opening (**21**), a second right opening (**22**), a first upper right opening (**23**), a first lower right opening (**24**), a second upper right opening (**25**) and a second lower right opening (**26**). These openings (**21**, **22**, ...) are each provided with an open/close shutter which is configured to freely open and close.

The first right opening (**21**) is formed in the lower part of the right partition plate (**20**) toward the front. When the open/close shutter for the first right opening (**21**) is open, the first channel (**51**) and the lower right channel (**66**) communicate with each other. The second right opening (**22**) is formed in the lower part of the right partition plate (**20**) toward the rear. When the open/close shutter for the second right opening (**22**) is open, the second channel (**52**) and the lower right channel (**66**) communicate with each other.

The first upper right opening (**23**) is formed in the upper part of the right partition plate (**20**) adjacent the first adsorption element (**81**). When the open/close shutter for the first upper right opening (**23**) is open, the first upper channel (**53**) and the upper right channel (**65**) communicate with each other. The first lower right opening (**24**) is formed in the lower part of the right partition plate (**20**) adjacent the first adsorption element (**81**). When the open/close shutter for the first lower right opening (**24**) is open, the first lower channel (**54**) and the lower right channel (**66**) communicate with each other.

The second upper right opening (**25**) is formed in the upper part of the right partition plate (**20**) adjacent the second adsorption element (**82**). When the open/close shutter for the second upper right opening (**25**) is open, the second upper channel (**55**) and the upper right channel (**65**) communicate with each other. The second lower right opening (**26**) is formed in the lower part of the right partition plate (**20**) adjacent the second adsorption element (**82**). When the open/close shutter for the second lower right opening (**26**) is open, the second lower channel (**56**) and the lower right channel (**66**) communicate with each other.

The left partition plate (**30**) is formed with a first left opening (**31**), a second left opening (**32**), a first upper left opening (**33**), a first lower left opening (**34**), a second upper left opening (**35**) and a second lower left opening (**36**). These openings (**31**, **32**, ...) are each provided with an open/close shutter which is configured to freely open and close.

The first left opening (**31**) is formed in the lower part of the left partition plate (**30**) toward the front. When the open/close shutter for the first upper left opening (**31**) is open, the first channel (**51**) and the lower left channel (**68**) communicate with each other. The second left opening (**32**) is formed in the lower part of the left partition plate (**30**) toward the rear. When the open/close shutter for the second left opening (**32**) is open, the second channel (**52**) and the lower left channel (**68**) communicate with each other.

The first upper left opening (**33**) is formed in the upper part of the left partition plate (**30**) adjacent the first adsorption element (**81**). When the open/close shutter for the first upper left opening (**33**) is open, the first upper channel (**53**) and the upper left channel (67) communicate with each other. The first lower left opening (**34**) is formed in the lower part of the left partition plate (**30**) adjacent the first adsorption element (**81**). When the open/close shutter for the first lower left opening (**34**) is open, the first lower channel (**54**) and the lower left channel (**68**) communicate with each other.

The second upper left opening (**35**) is formed in the upper part of the left partition plate (**30**) adjacent the second adsorption element (**82**). When the open/close shutter for the second upper left opening (**35**) is open, the second upper channel (**55**) and the upper left channel (**67**) communicate with each other. The second lower left opening (**36**) is formed in the lower part of the left partition plate (**30**) adjacent the second adsorption element (**82**). When the open/close shutter for the second lower left opening (**36**) is open, the second lower channel (**56**) and the lower left channel (**68**) communicate with each other.

### ― Refrigerant circuit configuration ―

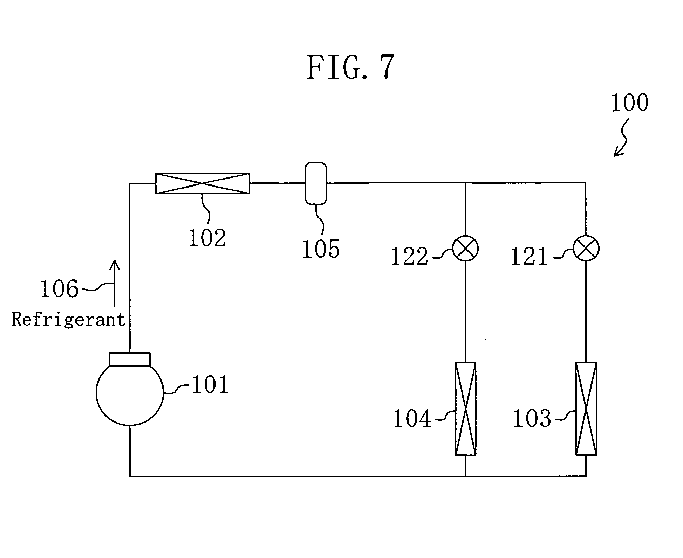

Next, the configuration of the refrigerant circuit (**100**) will be described in detail with reference to the drawings. Figure **7** is a circuit diagram showing the refrigerant circuit (**100**) of the first embodiment.

The refrigerant circuit (**100**) is a closed circuit in which refrigerant (**106**) is charged. The refrigerant circuit (**100**) is provided with the compressor (**101**), the regeneration heat exchanger (**102**), the first heat exchanger (**103**), the second heat exchanger (**104**), a receiver (**105**), the first motor-operated expansion valve (**121**) and the second motor-operated expansion valve (**122**). This refrigerant circuit (**100**) operates on a refrigeration cycle by circulating refrigerant (**106**) therethrough.

In the refrigerant circuit (**100**), the discharge side of the compressor (**101**) is connected to one end of the regeneration heat exchanger (**102**). The other end of the regeneration heat exchanger (**102**) is connected to one end of the receiver (**105**). The other end of the receiver (**105**) is branched into two lines, one connected to one end of the first motor-operated expansion valve (**121**) and the other to one end of the second motor-operated expansion valve (**122**). The other end of the first motor-operated expansion valve (**121**) is connected to one end of the first heat exchanger (**103**), while the other end of the second motor-operated expansion valve (**122**) is connected to one end of the second heat exchanger (**104**). Further, the other ends of the first motor-operated expansion valve (**121**) and the second motor-operated expansion valve (**122**) are connected to the suction side of the compressor (**101**).

Refrigerant having a larger sensible heat zone (**R**) than R22 is preferably used as the refrigerant (**106**) in the refrigerant circuit (**100**) of above configuration. More specifically, refrigerant preferably used as the above refrigerant (**106**) is a single refrigerant of R32, a mixed refrigerant containing R32 refrigerant in the range from 75 weight % inclusive to 100 weight % exclusive (for example, a mixed refrigerant of R32 and R125), or CO2 refrigerant.

### ― Operational behavior ―

Next, a description will be made of the operational behavior of the humidity control system. The humidity control system operates to switch the operation mode from dehumidification to humidification or vice versa. Further, as described later, the humidity control system alternately repeats a first behavior and a second behavior to provide dehumidification and humidification.

### <Dehumidification mode>

In the refrigerant circuit (**100**) during dehumidification, the regeneration heat exchanger (**102**) acts as a condenser, the first heat exchanger (**103**) acts as an evaporator, and the second heat exchanger (**104**) is deactivated.

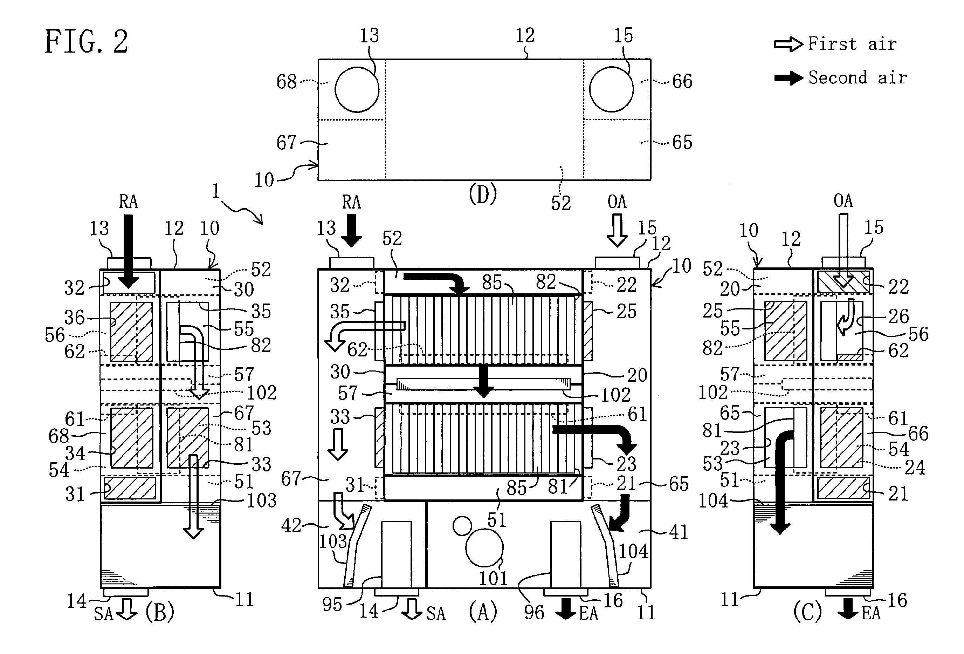

As shown in Figures **1** and **2**, when the intake fan (**95**) is driven in the dehumidification mode, outside air (OA) is taken into the casing (**10**) through the outdoor suction port (**15**). The outside air (OA) flows as a first air into the lower right channel (**66**). On the other hand, when the exhaust fan (**96**) is driven, room air (RA) is taken into the casing (**10**) through the indoor suction port (**13**). The room air (RA) flows as a second air into the lower left channel (**68**).

Next, the first behavior in the dehumidification mode will be described with reference to Figures **1** and **5A**. The first behavior includes an action to adsorb moisture in the outside air, i.e., the first air, on the first adsorption element (**81**) and an action to regenerate the second adsorption element (**82**) by heating it with the room air, i.e., the second air. In other words, during the first behavior, the first air is dehumidified by the first adsorption element (**81**) and, concurrently, the second air regenerates the adsorbent on the second adsorption element (**82**).

As shown in Figure **1**, in the right partition plate (**20**), the open/close shutters for the first lower right opening (**24**) and the second upper right opening (**25**) are open and the open/close shutters for the remaining openings (**21**, **22**, **23**, **26**) are closed. In this state, the lower right channel (**66**) and the first lower channel (**54**) communicate with each other through the first lower right opening (**24**) and the second upper channel (**55**) and the upper right channel (**65**) communicate with each other through the second upper right opening (**25**).

In the left partition plate (**30**), the open/close shutters for the first left opening (**31**) and the first upper left opening (**33**) are open and the open/close shutters for the remaining openings (**32, 34, 35, 36**) are closed. In this state, the first channel (**51**) and the lower left channel (**68**) communicate with each other through the first left opening (**31**) and the first upper channel (**53**) and the upper left channel (**67**) communicate with each other through the first upper left opening (**33**).

Further, as shown in Figure **5A**, the first shutter (**61**) is closed and the second shutter (**62**) is open. In this state, the middle channel (**57**) is communicated with the second lower channel (**56**).

The first air let in the lower right channel (**66**) by driving the intake fan (**95**) then flows through the first lower right opening (**24**) into the first lower channel (**54**). On the other hand, the second air let in the lower left channel (**68**) by driving the exhaust fan (**96**) then flows through the first left opening (**31**) into the first channel (**51**).

The first air in the first lower channel (**54**) flows into the humidity control passages (**85**) of the first adsorption element (**81**). While the first air flows through the humidity control passages (**85**), water vapor contained in the first air is adsorbed by the adsorbent. The first air thus dehumidified by the first adsorption element (**81**) flows into the first upper channel (**53**).

On the other hand, the second air in the first channel (**51**) flows into the cooling passages (**86**) of the first adsorption element (**81**). While the second air flows through the cooling passages (**86**), it absorbs heat of adsorption produced when water vapor is adsorbed by the adsorbent in the humidity control passages (**85**). The second air having taken heat of adsorption flows into the middle channel (**57**) and passes through the regeneration heat exchanger (**102**). During the time, the second air is heated up to approximately 60°C by heat exchange with the refrigerant (**106**) in the regeneration heat exchanger (**102**). Thereafter, the second air flows from the middle channel (**57**) into the second lower channel (**56**).

The second air heated by the first adsorption element (**81**) and the regeneration heat exchanger (**102**) is let into the humidity control passages (**85**) of the second adsorption element (**82**). In the humidity control passages (**85**), the adsorbent is heated up by the second air at approximately 60°C to desorb water vapor. In other words, the second adsorption element (**82**) is regenerated. The water vapor desorbed from the adsorbent flows into the second upper channel (**55**) together with the second air.

As shown in Figure **1,** the dehumidified first air let in the first upper channel (**53**) flows through the first upper left opening (**33**) into the upper left channel (**67**) and then into the intake channel (**42**). The first air passes through the first heat exchanger (**103**) during flowing through the intake channel (**42**) so that it is cooled by heat exchange with the refrigerant (**106**). Thereafter, the dehumidified and cooled first air is supplied through the intake port (**14**) to the room.

On the other hand, the second air let in the second upper channel (**55**) flows through the second upper right opening (**25**) into the upper right channel (**65**) and then into the exhaust channel (**41**). The second air passes through the second heat exchanger (**104**) during flowing through the exhaust channel (**41**). At the time, the second heat exchanger (**104**) is deactivated so that the second air is neither heated nor cooled. Then, the second air, which has been used for cooling of the first adsorption element (**81**) and regeneration of the second adsorption element (**82**), is exhausted through the exhaust port (**16**) to the outside.

Next, the second behavior in the dehumidification mode will be described with reference to Figures **2** and **5B**. The second behavior includes, contrary to the first behavior, an action to adsorb moisture in the outside air, i.e., the first air, on the second adsorption element (**82**) and an action to regenerate the first adsorption element (**81**) by heating it with the room air, i.e., the second air. In other words, during the second behavior, the first air is dehumidified by the second adsorption element (**82**) and, concurrently, the second air regenerates the adsorbent on the first adsorption element (**81**).

As shown in Figure **2**, in the right partition plate (**20**), the open/close shutters for the first upper right opening (**23**) and the second lower right opening (**26**) are open and the open/close shutters for the remaining openings (**21, 22, 24, 25**) are closed. In this state, the first upper channel (**53**) and the upper right channel (**65**) communicate with each other through the first upper right opening (**23**) and the lower right channel (**66**) and the second lower channel (**56**) communicate with each other through the second lower right opening (**26**).

In the left partition plate (**30**), the open/close shutters for the second left opening (**32**) and the second upper left opening (**35**) are open and the open/close shutters for the remaining openings (**31, 33, 34, 36**) are closed. In this state, the lower left channel (**68**) and the second channel (**52**) communicate with each other through the second left opening (**32**) and the second upper channel (**55**) and the upper left channel (**67**) communicate with each other through the second upper left opening (**35**).

Further, as shown in Figure **5B,** the second shutter (**62**) is closed and the first shutter (**61**) is open. In this state, the middle channel (**57**) is communicated with the first lower channel (**54**).

The first air let in the lower right channel (**66**) by driving the intake fan (**95**) then flows through the second lower right opening (**26**) into the second lower channel (**56**). On the other hand, the second air let in the lower left channel (**68**) by driving the exhaust fan (**96**) then flows through the second left opening (**32**) into the second channel (**52**).

The first air in the second lower channel (**56**) flows into the humidity control passages (**85**) of the second adsorption element (**82**). While the first air flows through the humidity control passages (**85**), water vapor contained in the first air is adsorbed by the adsorbent. The first air thus dehumidified by the second adsorption element (**82**) flows into the second upper channel (**55**).

On the other hand, the second air in the second channel (**52**) flows into the cooling passages (**86**) of the second adsorption element (**82**). While the second air flows through the cooling passages (**86**), it absorbs heat of adsorption produced when water vapor is adsorbed by the adsorbent in the humidity control passages (**85**). The second air having taken heat of adsorption flows into the middle channel (**57**) and passes through the regeneration heat exchanger (**102**). During the time, the second air is heated up to approximately 60°C by heat exchange with the refrigerant (**106**) in the regeneration heat exchanger (**102**). Thereafter, the second air flows from the middle channel (**57**) into the first lower channel (**54**).

The second air heated by the second adsorption element (**82**) and the regeneration heat exchanger (**102**) is let into the humidity control passages (**85**) of the first adsorption element (**81**). In the humidity control passages (**85**), the adsorbent is heated up by the second air at approximately 60°C to desorb water vapor. In other words, the first adsorption element (**81**) is regenerated. The water vapor desorbed from the adsorbent flows into the first upper channel (**53**) together with the second air.

As shown in Figure **2**, the dehumidified first air let in the second upper channel (**55**) flows through the second upper left opening (**35**) into the upper left channel (**67**) and then into the intake channel (**42**). The first air passes through the first heat exchanger (**103**) during flowing through the intake channel (**42**) so that it is cooled by heat exchange with the refrigerant (**106**). Thereafter, the dehumidified and cooled first air is supplied through the intake port (**14**) to the room.

On the other hand, the second air let in the first upper channel (**53**) flows through the first upper right opening (**23**) into the upper right channel (**65**) and then into the exhaust channel (**41**). The second air passes through the second heat exchanger (**104**) during flowing through the exhaust channel (**41**). At the time, the second heat exchanger (**104**) is deactivated so that the second air is neither heated nor cooled. Then, the second air, which has been used for cooling of the second adsorption element (**82**) and regeneration of the first adsorption element (**81**), is exhausted through the exhaust port (**16**) to the outside.

### <Humidification mode>

In the refrigerant circuit (**100**) during humidification, the regeneration heat exchanger (**102**) acts as a condenser, the second heat exchanger (**104**) acts as an evaporator, and the first heat exchanger (**103**) is deactivated.

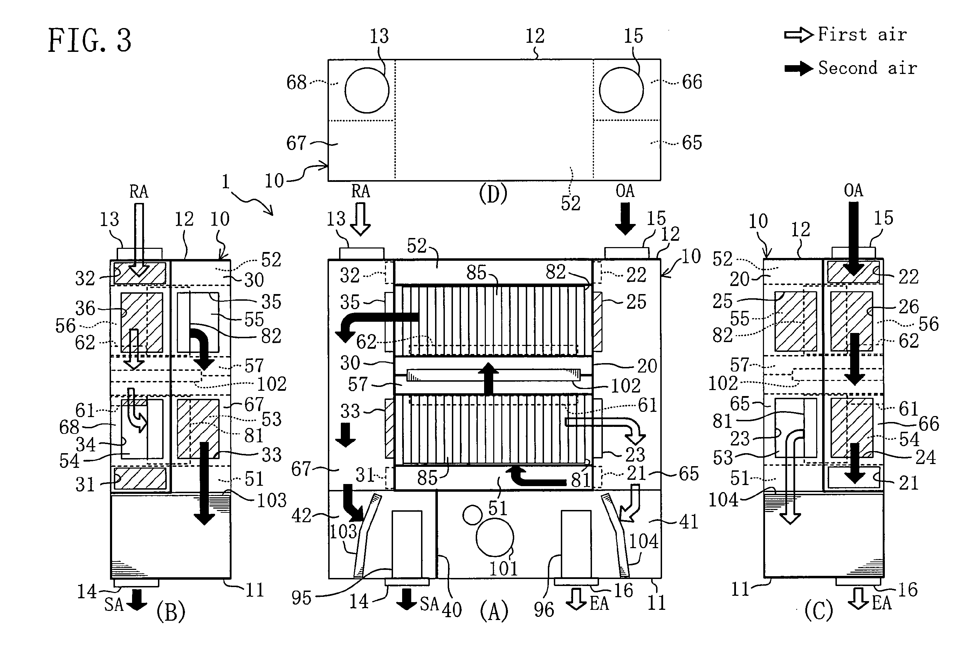

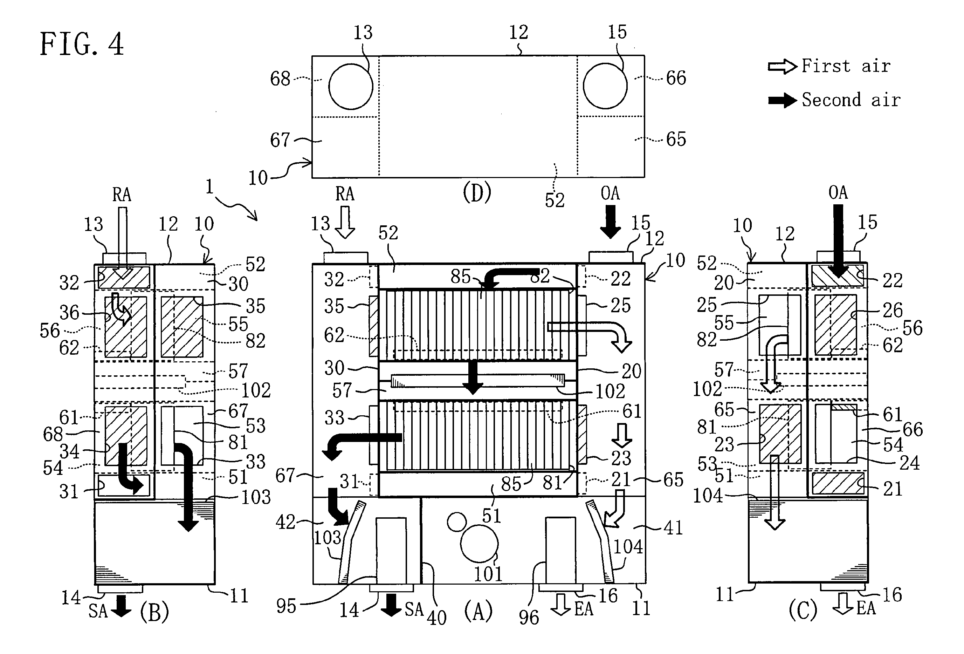

As shown in Figures **3** and **4**, when the intake fan (**95**) is driven in the humidification mode, outside air (OA) is taken into the casing (**10**) through the outdoor suction port (**15**). The outside air flows as a second air into the lower right channel (**66**). On the other hand, when the exhaust fan (**96**) is driven, room air (RA) is taken into the casing (**10**) through the indoor suction port (**13**). The room air flows as a first air into the lower left channel (**68**).

Next, the first behavior in the humidification mode will be described with reference to Figures **3** and **5A**. The first behavior includes an action to adsorb moisture in the room air, i.e., the first air, on the first adsorption element (**81**) and an action to regenerate the second adsorption element (**82**) by heating it with the outside air, i.e., the second air. In other words, during the first behavior, the second air is humidified by the second adsorption element (**82**) and, concurrently, the adsorbent of the first adsorption element (**81**) adsorbs moisture in the first air.

As shown in Figure **3**, in the right partition plate (**20**), the open/close shutters for the first right opening (**21**) and the first upper right opening (**23**) are open and the open/close shutters for the remaining openings (**22, 24, 25, 26**) are closed. In this state, the lower right channel (**66**) and the first channel (**51**) communicate with each other through the first right opening (**21**) and the first upper channel (**53**) and the upper right channel (**65**) communicate with each other through the first upper right opening (**23**).

In the left partition plate (**30**), the open/close shutters for the first lower left opening (**34**) and the second upper left opening (**35**) are open and the open/close shutters for the remaining openings (**31, 32, 33, 36**) are closed. In this state, the lower left channel (**68**) and the first lower channel (**54**) communicate with each other through the first lower left opening (**34**) and the second upper channel (**55**) and the upper left channel (**67**) communicate with each other through the second upper left opening (**35**).

Further, as shown in Figure **5A**, the first shutter (**61**) is closed and the second shutter (**62**) is open. In this state, the middle channel (**57**) is communicated with the second lower channel (**56**).

The first air let in the lower left channel (**68**) by driving the exhaust fan (**96**) then flows through the first lower left opening (**34**) into the first lower channel (**54**). On the other hand, the second air let in the lower right channel (**66**) by driving the intake fan (**95**) then flows through the first right opening (**21**) into the first channel (**51**).

The first air in the first lower channel (**54**) flows into the humidity control passages (**85**) of the first adsorption element (**81**). While the first air flows through the humidity control passages (**85**), water vapor contained in the first air is adsorbed by the adsorbent. The first air from which moisture has been taken by the first adsorption element (**81**) flows into the first upper channel (**53**).

On the other hand, the second air in the first channel (**51**) flows into the cooling passages (**86**) of the first adsorption element (**81**). While the second air flows through the cooling passages (**86**), it absorbs heat of adsorption produced when water vapor is adsorbed by the adsorbent in the humidity control passages (**85**). The second air having taken heat of adsorption flows into the middle channel (**57**) and passes through the regeneration heat exchanger (**102**). During the time, the second air is heated up to approximately 60°C by heat exchange with the refrigerant (**106**) in the regeneration heat exchanger (**102**). Thereafter, the second air flows from the middle channel (**57**) into the second lower channel (**56**).

The second air heated by the first adsorption element (**81**) and the regeneration heat exchanger (**102**) is let into the humidity control passages (**85**) of the second adsorption element (**82**). In the humidity control passages (**85**), the adsorbent is heated up by the second air at approximately 60°C to desorb water vapor. In other words, the second adsorption element (**82**) is regenerated. The water vapor desorbed from the adsorbent is given to the second air to humidify the second air. The second air thus humidified by the second adsorption element (**82**) then flows into the second upper channel (**55**).

As shown in Figure **3**, the second air let in the second upper channel (**55**) flows through the second upper left opening (**35**) into the upper left channel (**67**) and then into the intake channel (**42**). The second air passes through the first heat exchanger (**103**) during flowing through the intake channel (**42**). At the time, the second heat exchanger (**103**) is deactivated so that the second air is neither heated nor cooled. Then, the humidified second air is supplied through the intake port (**14**) to the room.

On the other hand, the first air let in the first upper channel (**53**) flows through the first upper right opening (**23**) into the upper right channel (**65**) and then into the exhaust channel (**41**). The first air passes through the second heat exchanger (**104**) during flowing through the exhaust channel (**41**) so that it is cooled by heat exchange with the refrigerant (**106**). Thereafter, the first air from which moisture and heat have been taken is exhausted through the exhaust port (**16**) to the outside.

Next, the second behavior in the humidification mode will be described with reference to Figures **4** and **5B.** The second behavior includes, contrary to the first behavior, an action to adsorb moisture in the room air, i.e., the first air, on the second adsorption element (**82**) and an action to regenerate the first adsorption element (**81**) by heating it with the outside air, i.e., the second air. In other words, during the second behavior, the second air is humidified by the first adsorption element (**81**) and, concurrently, the adsorbent of the second adsorption element (**82**) adsorbs moisture in the first air.

As shown in Figure **4**, in the right partition plate (**20**), the open/close shutters for the second right opening (**22**) and the second upper right opening (**25**) are open and the open/close shutters for the remaining openings (**21, 23, 24, 26**) are closed. In this state, the lower right channel (**66**) and the second channel (**52**) communicate with each other through the second right opening (**22**) and the second upper channel (**55**) and the upper right channel (**65**) communicate with each other through the second upper right opening (**25**).

In the left partition plate (**30**), the open/close shutters for the first upper left opening (**33**) and the second lower left opening (**36**) are open and the open/close shutters for the remaining openings (**31, 32, 34, 35**) are closed. In this state, the first upper channel (**53**) and the upper left channel (**67**) communicate with each other through the first upper left opening (**33**) and the lower left channel (**68**) and the second lower channel (**56**) communicate with each other through the second lower left opening (**36**).

Further, as shown in Figure **5B,** the second shutter (**62**) is closed and the first shutter (**61**) is open. In this state, the middle channel (**57**) is communicated with the first lower channel (**54**).

The first air let in the lower left channel (**68**) by driving the exhaust fan (**96**) then flows through the second lower left opening (**36**) into the second lower channel (**56**). On the other hand, the second air let in the lower right channel (**66**) by driving the intake fan (**95**) then flows through the second right opening (**22**) into the second channel (**52**).

The first air in the second lower channel (**56**) flows into the humidity control passages (**85**) of the second adsorption element (**82**). While the first air flows through the humidity control passages (**85**), water vapor contained in the first air is adsorbed by the adsorbent. The first air from which moisture has been taken by the second adsorption element (**82**) flows into the second upper channel (**55**).

On the other hand, the second air in the second channel (**52**) flows into the cooling passages (**86**) of the second adsorption element (**82**). While the second air flows through the cooling passages (**86**), it absorbs heat of adsorption produced when water vapor is adsorbed by the adsorbent in the humidity control passages (**85**). The second air having taken heat of adsorption flows into the middle channel (**57**) and passes through the regeneration heat exchanger (**102**). During the time, the second air is heated up to approximately 60°C by heat exchange with the refrigerant (**106**) in the regeneration heat exchanger (**102**). Thereafter, the second air flows from the middle channel (**57**) into the first lower channel (**54**).

The second air heated by the second adsorption element (**82**) and the regeneration heat exchanger (**102**) is let into the humidity control passages (**85**) of the first adsorption element (**81**). In the humidity control passages (**85**), the adsorbent is heated up by the second air at approximately 60°C to desorb water vapor. In other words, the first adsorption element (**81**) is regenerated. The water vapor desorbed from the adsorbent is given to the second air to humidify the second air. The second air thus humidified by the first adsorption element (**81**) then flows into the first upper channel (**53**).

As shown in Figure **4**, the second air let in the first upper channel (**53**) flows through the first upper left opening (**33**) into the upper left channel (**67**) and then into the intake channel (**42**). The second air passes through the first heat exchanger (**103**) during flowing through the intake channel (**42**). At the time, the second heat exchanger (**104**) is deactivated so that the second air is neither heated nor cooled. Then, the humidified second air is supplied through the intake port (**14**) to the room.

On the other hand, the first air let in the second upper channel (**55**) flows through the second upper right opening (**25**) into the upper right channel (**65**) and then into the exhaust channel (**41**). The first air passes through the second heat exchanger (**104**) during flowing through the exhaust channel (**41**) so that it is cooled by heat exchange with the refrigerant (**106**). Thereafter, the first air from which moisture and heat have been taken is exhausted through the exhaust port (**16**) to the outside.

### <<Operational behavior of refrigerant circuit>>

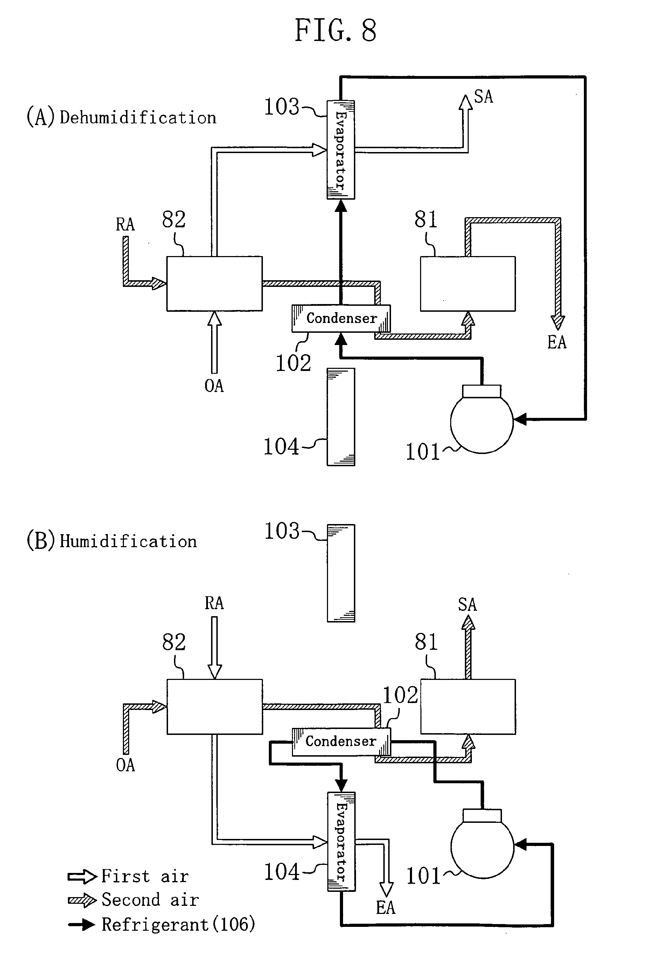

Next, a description will be made of the operational behavior of the refrigerant circuit (**100**) of the first embodiment in the dehumidification and humidification modes with reference to Figures **7** and **8**. The flows of the first and second airs shown in Figure **8** are those in the second behavior. Further, the motor-operated expansion valves (**121**, **122**) are not given in Figure **8**.

In the dehumidification mode, the second motor-operated expansion valve (**122**) of the refrigerant circuit (**100**) is fully closed. On the other hand, the opening of the first motor-operated expansion valve (**121**) is controlled adequately according to the operational conditions.

When the compressor (**110**) is driven in this conditions, the refrigerant circuit (**100**) circulates the refrigerant (**106**) therethrough to operate on a refrigeration cycle. In this case, in the refrigerant circuit (**100**), the regeneration heat exchanger (**102**) acts as a condenser, the first heat exchanger (**103**) acts as an evaporator (**103**) and the second heat exchanger (**104**) is deactivated as shown in Figure **8A**.

The refrigerant (**106**) adiabatically compressed by the compressor (**101**) is discharged in a high-temperature and high-pressure state from the compressor (**101**) and then transferred to the regeneration heat exchanger (**102**). The high-temperature, high-pressure refrigerant (**106**) flowing through the regeneration heat exchanger (**102**) exchanges heat with the second air to release to the second air heat used for thermal regeneration of the first adsorption element (**81**). This heat release causes the refrigerant (**106**) in the regeneration heat exchanger (**102**) to gradually condense and reach a low temperature. The condensed refrigerant (**106**) passes through the receiver (**105**) and is then transferred to the first motor-operated expansion valve (**121**). When the refrigerant (**106**) passes through the first motor-operated expansion valve (**121**), it is reduced in pressure into a low-temperature and low-pressure state. The refrigerant (**106**) reduced in pressure by the first motor-operated expansion valve (**121**) is transferred to the first heat exchanger (**103**). The low-temperature, low-pressure refrigerant (**106**) flowing through the first heat exchanger (**103**) exchanges heat with the first air to absorb heat from the first air. This heat absorption causes the refrigerant (**106**) in the first heat exchanger (**103**) to gradually evaporate and reach a high temperature. The evaporated refrigerant (**106**) is sucked into the compressor (**101**) and then discharged from the compressor (**101**).

In the humidification mode, the first motor-operated expansion valve (**121**) of the refrigerant circuit (**100**) is fully closed. On the other hand, the opening of the second motor-operated expansion valve (**122**) is controlled adequately according to the operational conditions.

When the compressor (**110**) is driven in this conditions, the refrigerant circuit (**100**) circulates the refrigerant (**106**) therethrough to operate on a refrigeration cycle. In this case, in the refrigerant circuit (**100**), the regeneration heat exchanger (**102**) acts as a condenser, the second heat exchanger (**104**) acts as an evaporator (**103**) and the first heat exchanger (**103**) is deactivated as shown in Figure **8B**.

The refrigerant (**106**) adiabatically compressed by the compressor (**101**) is discharged in a high-temperature and high-pressure state from the compressor (**101**) and then transferred to the regeneration heat exchanger (**102**). The high-temperature, high-pressure refrigerant (**106**) flowing through the regeneration heat exchanger (**102**) exchanges heat with the second air to release to the second air heat used for thermal regeneration of the first adsorption element (**81**). This heat release causes the refrigerant (**106**) in the regeneration heat exchanger (**102**) to gradually condense and reach a low temperature. The condensed refrigerant (**106**) passes through the receiver (**105**) and is then transferred to the second motor-operated expansion valve (**122**). When the refrigerant (**106**) passes through the second motor-operated expansion valve (**122**), it is reduced in pressure into a low-temperature and low-pressure state. The refrigerant (**106**) reduced in pressure by the second motor-operated expansion valve (**122**) is transferred to the second heat exchanger (**104**). The low-temperature, low-pressure refrigerant (**106**) flowing through the second heat exchanger (**104**) exchanges heat with the first air to absorb heat from the first air. This heat absorption causes the refrigerant (**106**) in the second heat exchanger (**104**) to gradually evaporate and reach a high temperature. The evaporated refrigerant (**106**) is sucked into the compressor (**101**) and then discharged from the compressor (**101**).

### ― Effects of Embodiment 1 ―

Next, a description will be made of effects of the first embodiment when R32 is used as the refrigerant (**106**) in the refrigerant circuit (**100**).

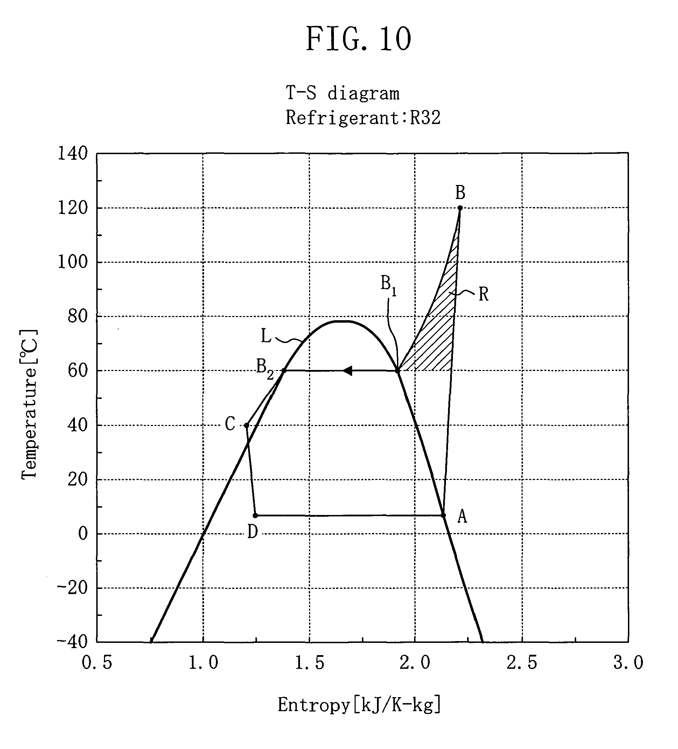

Figure **10** shows an example of a T-S diagram showing a refrigeration cycle of the refrigerant circuit (**100**) using R32. The T-S diagram indicates changes of state of R23 in the refrigeration cycle by laying off temperatures of the refrigerant (**106**) as ordinates and entropies thereof as abscissas. The curve L is the saturation curve of R32.

The refrigerant circuit (**100**) using R32 operates on a general refrigeration cycle shown roughly in the loop A→B→C→D. In this refrigeration cycle, A→B indicates the compression stroke in the compressor (**101**), B→C indicates the condensation stroke in the regeneration heat exchanger (**102**), C→D indicates the expansion stroke in the motor-operated expansion valve (**121**, **122**), and D→A indicates the evaporation stroke in the first heat exchanger (**103**) or the second heat exchanger (**104**). In this refrigeration cycle, thermal regeneration of the adsorption element (**81**, **82**) is carried out in the condensation stroke in the regeneration heat exchanger (**102**) from Point B to C. Next, changes of state of refrigerant (**106**) from Point B to C will be described.

At Point B which is the discharge temperature of the compressor (**101**), R32 compressed into high-temperature, high-pressure superheated vapor reaches approximately 120°C. Next, R32 at Point B exchanges heat with air in the regeneration heat exchanger (**102**) in the period from Point B to C. During the period, R32 gradually decreases its temperature by means of heat release to the air to reach approximately 60°C (B→B1). Then, R32 gradually condenses from saturated vapor to saturated liquid (B1→B2). R32 is further cooled into a supercooled liquid (Point C). Since, in this embodiment, the temperature required for thermal regeneration of the adsorption elements (**81**, **82**) is set at approximately 60°C, the sensible heat zone (**R**) effectively acting on thermal regeneration of the adsorption elements (**81**, **82**) falls within the hatched area. The sensible heat zone (**R**) for R32 is larger than the sensible heat zone (**R**) for R22 having substantially the same discharge temperature (**B**) as shown in Figure **9**. Therefore, since this embodiment employs R32 as the refrigerant (**106**) in the refrigerant circuit (**100**), it provides a larger sensible heat zone (**R**) than R22 to increase the amount of heat release to the air from the regeneration heat exchanger (**102**). This improves the efficiency of thermal regeneration of the adsorption elements (**81**, **82**).

Such improvement in the efficiency of thermal regeneration due to increase in sensible heat zone (**R**) can be provided likewise with the use of an R32-rich mixed refrigerant (a mixed refrigerant containing R32 in the range from 75 weight % inclusive to 100 weight % exclusive.

Next, a description will be made of effects of the first embodiment when CO2 is used as the refrigerant (**106**) in the refrigerant circuit (**100**). The pressure of the high-pressure side of the refrigerant circuit (**100**) during the refrigeration cycle is higher than the critical pressure of CO2, so that the refrigerant (**106**) in the refrigerant circuit (**106**) enters a supercritical cycle.

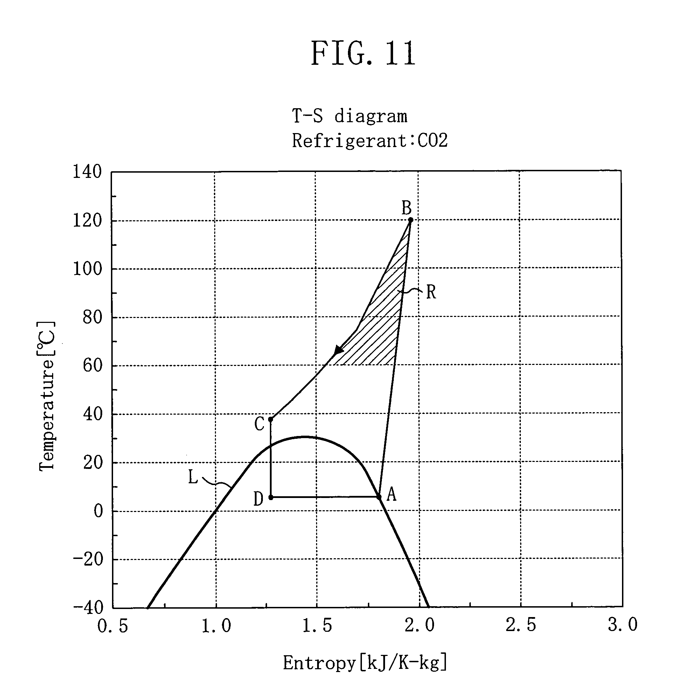

Figure **11A** shows an example of a T-S diagram showing a refrigeration cycle (supercritical cycle) of the refrigerant circuit (**100**) using CO2. The T-S diagram indicates changes of state of CO2 in the refrigeration cycle by laying off temperatures of the refrigerant (**106**) as ordinates and entropies thereof as abscissas. The curve L is the saturation curve of CO2. In this refrigeration cycle, A→B indicates the compression stroke in the compressor (**101**), B→C indicates the heat release stroke in the regeneration heat exchanger (**102**), C→D indicates the expansion stroke in the motor-operated expansion valve (**121, 122**), and D→A indicates the evaporation stroke in the first heat exchanger (**103**) or the second heat exchanger (**104**). In this refrigeration cycle, thermal regeneration of the adsorption element (**81**, **82**) is carried out in the supercritical heat release stroke in the regeneration heat exchanger (**102**) from Point B to C. Next, changes of state of refrigerant (**106**) from Point B to C will be described.

In this refrigeration cycle, thermal regeneration of the first and second adsorption elements (**81, 82**) is carried out in the regeneration heat exchanger (**102**) in the period from Point B to C. In the period from Point B to C, CO2 is compressed to a higher pressure than its critical pressure into a supercritical state to reach approximately 120°C (Point B). Next, CO2 at Point B exchanges heat with air in the regeneration heat exchanger (**102**) in the period from Point B to C. During the period, CO2 in a supercritical state gradually decreases its temperature by means of heat release to the air. In this case, since CO2 is in a supercritical state, it decreases the temperature down to approximately 40°C (Point C) while keeping a supercritical state, without being condensed as in the aforementioned R32 shown in Figure **10**.

Since, in this embodiment, the temperature required for thermal regeneration of the adsorption elements (**81, 82**) is set at approximately 60°C, the sensible heat zone (**R**) effectively acting on thermal regeneration of the adsorption elements (**81, 82**) falls within the hatched area. The sensible heat zone (**R**) for CO2 is larger than the sensible heat zone (**R**) for R22 having substantially the same discharge temperature (**B**) as shown in Figure **9**. Therefore, this embodiment employs CO2 as the refrigerant (**106**) in the refrigerant circuit (**100**) to operate on a supercritical cycle, so that it provides a larger sensible heat zone (**R**) than R22 to increase the amount of heat release to the air from the regeneration heat exchanger (**102**). This improves the efficiency of thermal regeneration of the adsorption elements (**81, 82**).

### <<Embodiment 2 of the Invention>>

Next, a description will be made of a humidity control system according to a second embodiment of the invention. The humidity control system according to the second embodiment is configured to perform dehumidification and humidification of room air and uses as the adsorber (**80**) a first adsorption heat exchanger (**103**) and a second adsorption heat exchanger (**104**).

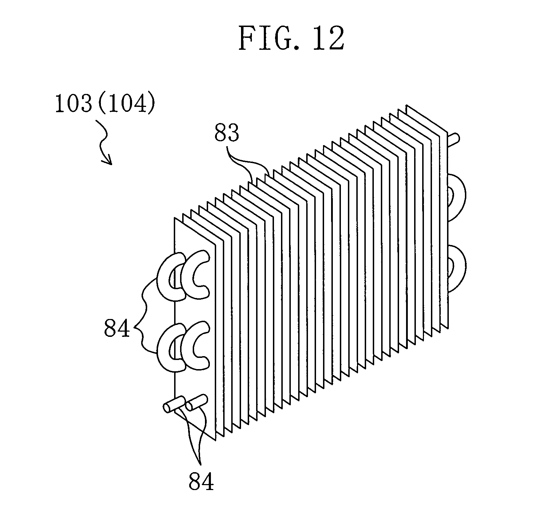

As shown in Figure **12**, each of the first adsorption heat exchanger (**103**) and the second adsorption heat exchanger (**104**) is formed of a cross-fin-tube type fin-and-tube heat exchanger. Specifically, each of the first adsorption heat exchanger (**103**) and the second adsorption heat exchanger (**104**) comprises a large number of aluminium fins (**83**) each formed in a rectangular plate shape and copper heat transfer pipes (**84**) passing through the fins (**83**). An adsorbent, such as zeolite, is carried on the outer surfaces of the fins (**83**).

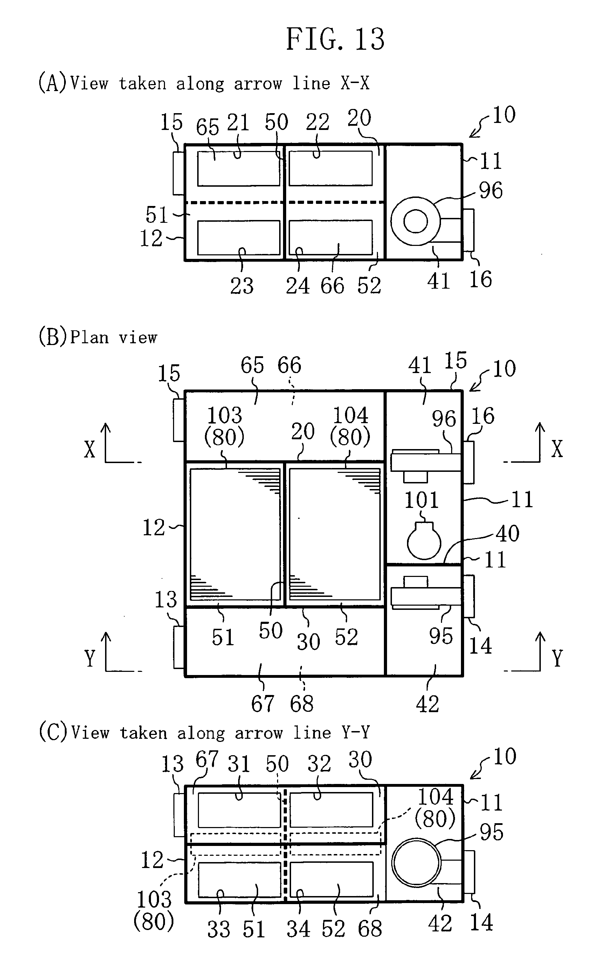

The humidity control system has a flat, hollow, rectangular parallelepiped casing (**10**). The internal structure of the casing (**10**) will be described with reference to Figure **13**. The bottom of Figure **13B** corresponds to the front side of the casing (**10**) and the top thereof corresponds to the rear side of the casing (**10**). In the following description, "right", "left", "upper" and "lower" refer to directionalities on the drawings to which the description makes reference.

The casing (**10**) is formed in the shape of a flat box generally cubic in plan view. The casing (**10**) is formed on the right by a first panel (**11**) and on the left by a second panel (**12**). A lower part of the first panel (**11**) is formed toward the front with an intake port (**14**) and formed toward the rear with an exhaust port (**16**). On the other hand, an upper part of the second panel (**12**) is formed toward the front with an indoor suction port (**13**) and a lower part thereof is formed toward the rear with an outdoor suction port (**15**)

The interior of the casing (**10**) is roughly divided into two spaces one to the right of the other.

The space of the casing (**10**) formed toward the first panel (**11**) is further divided into front and rear spaces by a partition plate (**40**). Of the front and rear spaces, the rear space forms an exhaust channel (**41**) and the front space forms an intake channel (**42**).

The exhaust channel (**41**) communicates with the outside of the room through the exhaust port (**16**). The exhaust channel (**41**) is provided with an exhaust fan (**96**) and a compressor (**101**). On the other hand, the intake channel (**42**) communicates with the room through the intake port (**14**). The intake channel (**42**) is provided with an intake fan (**95**).

The space of the casing (**10**) firmed toward the second panel (**12**) is further divided into three spaces, one in front of another, by a rear partition plate (**20**) and a front partition plate (**30**).

The space behind the rear partition plate (**20**) is further divided into two spaces one above the other. Out of these two spaces, the upper space forms a rear upper channel (**65**) and the lower space forms a rear lower channel (**66**). The rear upper channel (**65**) communicates with the outdoor suction port (**15**) but is divided off from the exhaust channel (**41**). On the other hand, the rear lower channel (**66**) communicates with the exhaust channel (**41**) but is divided off from the outdoor suction port (**15**).

The space in front of the front partition plate (**21**) is further divided into two spaces one above the other. Out of these two spaces, the upper space forms a front upper channel (**67**) and the lower space forms a front lower channel (**68**). The front upper channel (**67**) communicates with the indoor suction port (**13**) but is divided off from the intake channel (**42**). On the other hand, the front lower channel (**68**) communicates with the intake channel (**42**) but is divided off from the indoor suction port (**13**).

The space between the rear partition plate (**20**) and the front partition plate (**30**) is divided into a first channel (**51**) and a second channel (**52**) by a middle partition plate (**50**).

The first channel (**51**) is formed to the left of the middle partition plate (**50**). The first adsorption heat exchanger (**103**) is placed in the first channel (**51**). The first adsorption heat exchanger (**103**) divides the first channel (**51**) into upper and lower spaces. On the other hand, the second channel (**52**) is formed to the right of the middle partition plate (**50**). The second adsorption heat exchanger (**104**) is placed in the second channel (**52**). The second adsorption heat exchanger (**104**) divides the second channel (**52**) into upper and lower spaces.

As shown in Figure **13A**, the rear partition plate (**20**) is formed with a rear upper left opening (**21**), a rear upper right opening (**22**), a rear lower left opening (**23**), and a rear lower right opening (**24**). The rear upper left opening (**21**) is formed in an upper part of the left side of the rear partition plate (**20**), while the rear upper right opening (**22**) is formed in an upper part of the right side of the rear partition plate (**20**). The rear lower left opening (**23**) is formed in a lower part of the left side of the rear partition plate (**20**), while the rear lower right opening (**24**) is formed in a lower part of the right side of the rear partition plate (**20**).

The openings (**21, 22, 23, 24**) of the rear partition plate (**20**) are provided with open/close dampers, respectively. The dampers for the opening (**21, 22, 23, 24**) are independently switchable between open and closed positions. When the rear upper left opening (**21**) is open, the rear upper channel (**65**) communicates with the upper space of the first channel (**51**). When the rear upper right opening (**22**) is open, the rear upper channel (**65**) communicates with the upper space of the second channel (**52**). Further, when the rear lower left opening (**23**) is open, the rear lower channel (**66**) communicates with the lower space of the first channel (**51**). When the rear lower right opening (**24**) is open, the rear lower channel (**66**) communicates with the lower space of the second channel (**52**).

The front partition plate (**30**) is formed with a front upper left opening (**31**), a front upper right opening (**32**), a front lower left opening (**33**), and a front lower right opening (**34**). The front upper left opening (**31**) is formed in an upper part of the left side of the front partition plate (**30**), while the front upper right opening (**32**) is formed in an upper part of the right side of the front partition plate (**30**). The front lower left opening (**33**) is formed in a lower part of the left side of the front partition plate (**30**), while the front lower right opening (**34**) is formed in a lower part of the right side of the front partition plate (**30**).

The openings (**31, 32, 33, 34**) of the front partition plate (**21**) are provided with open/close dampers, respectively. The dampers for the opening (**31, 32, 33, 34**) are independently switchable between open and closed positions. When the front upper left opening (**31**) is open, the front upper channel (**67**) communicates with the upper space of the first channel (**51**). When the front upper right opening (**32**) is open, the front upper channel (**67**) communicates with the upper space of the second channel (**52**). Further, when the front lower left opening (**33**) is open, the front lower channel (**68)** communicates with the lower space of the first channel (**51**). When the front lower right opening (**34**) is open, the front lower channel (**68**) communicates with the lower space of the second channel (**52**).

### ― Refrigerant circuit configuration ―

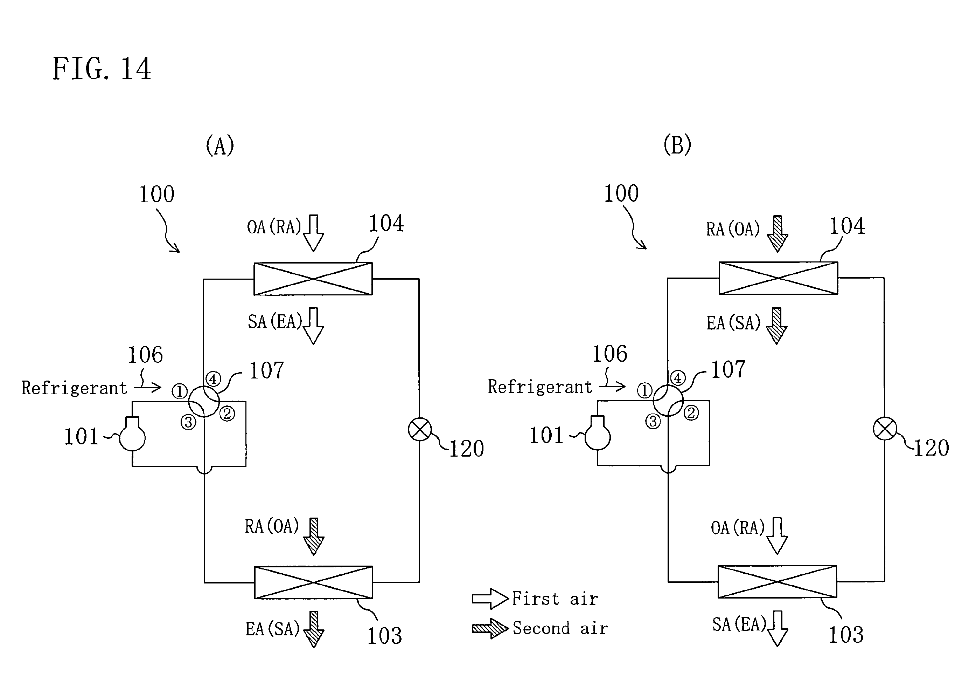

Next, the configuration of the refrigerant circuit (**100**) will be described in detail with reference to the drawings. Figure **14** is a circuit diagram showing the refrigerant circuit (**100**) of the second embodiment.

The refrigerant circuit (**100**) is a closed circuit provided with the compressor (**101**), the first adsorption heat exchanger (**103**), the second adsorption heat exchanger (**104**), a four-way selector valve (**107**), and a motor-operated expansion valve (**120**). This refrigerant circuit (**100**) operates on a refrigeration cycle by circulating refrigerant (**106**) therethrough.

In the refrigerant circuit (**100**), the discharge side of the compressor (**101**) is connected to a first port of the four-way selector valve (**107**) and the suction side thereof is connected to a second port of the four-way selector valve (**107**). One end of the first adsorption heat exchanger (**103**) is connected to a third port of the four-way selector valve (**107**), while the other end is connected to one end of the second adsorption heat exchanger (**104**) through the motor-operated expansion valve (**120**). The other end of the second adsorption heat exchanger (**104**) is connected to a fourth port of the four-way selector valve (**107**).

The four-way selector valve (**107**) is configured to freely switch from a position to concurrently allow communication between the first and third ports and communication between the second and fourth ports (the position shown in Figure **14A**) to a position to concurrently allow communication between the first and fourth ports and communication between the second and third ports (the position shown in Figure **14B**), or vice versa. When the four-way selector valve (**107**) switches to the first position, the first adsorption heat exchanger (**103**) acts as a condenser and the second adsorption heat exchanger (**104**) as an evaporator. On the other hand, when the four-way selector valve (**107**) switches to the second position, the first adsorption heat exchanger (**103**) acts as an evaporator and the second adsorption heat exchanger (**104**) as a condenser.

Like the first embodiment, refrigerant having a larger sensible heat zone (**R**) than R22 is preferably used as the refrigerant (**106**) in the refrigerant circuit (**100**) of above configuration. More specifically, refrigerant preferably used as the above refrigerant (**106**) is a single refrigerant of R32, a mixed refrigerant containing R32 refrigerant in the range from 75 weight % inclusive to 100 weight % exclusive (for example, a mixed refrigerant of R32 and R125), or CO2 refrigerant.

### ― Operational behavior ―

Next, a description will be made of the operational behavior of the above humidity control system. The humidity control system operates to switch the operation mode from dehumidification to humidification or vice versa. Further, the humidity control system continuously performs dehumidification or humidification while alternately repeating a first behavior and a second behavior by changing the direction of circulation of the refrigerant in the refrigerant circuit (**100**).

### <Dehumidification mode>

In the first behavior during dehumidification, the refrigerant circuit (**100**) takes the second position (the position shown in Figure **14B**). In this position, the first adsorption heat exchanger (**103**) acts as an evaporator and the second adsorption heat exchanger (**104**) acts as a condenser. In the second behavior, the refrigerant circuit (**100**) takes the first position (the position shown in Figure **14A**). In this position, the first adsorption heat exchanger (**103**) acts as a condenser and the second adsorption heat exchanger (**104**) acts as an evaporator.

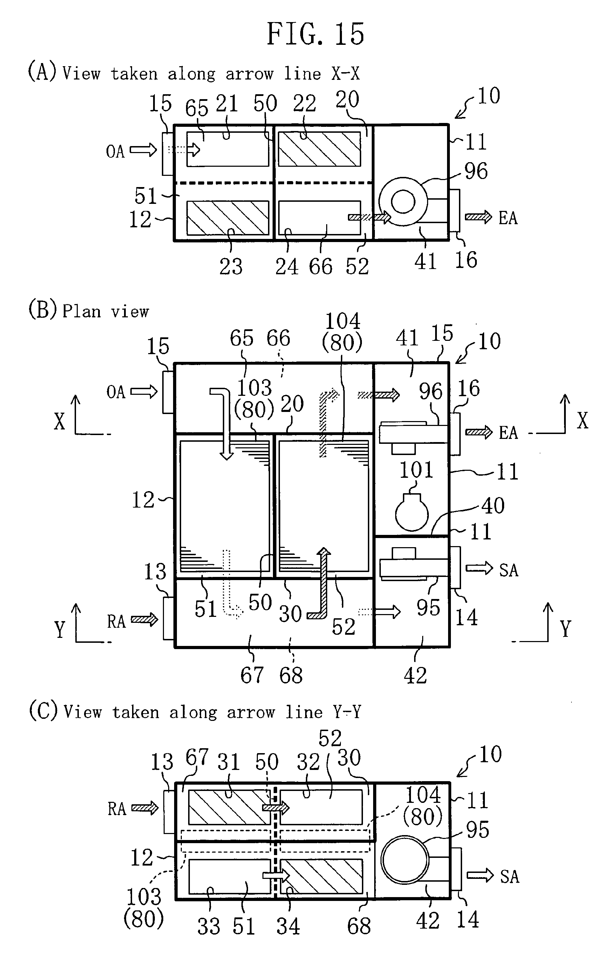

As shown in Figure **15**, when the intake fan (**95**) is driven in the dehumidification mode, outside air (OA) is taken into the casing (**10**) through the outdoor suction port (**15**). The outside air (OA) flows as a first air into the rear upper channel (**65**). On the other hand, when the exhaust fan (**96**) is driven, room air (RA) is taken into the casing (**10**) through the indoor suction port (**13**). The room air (RA) flows as a second air into the front upper channel (**67**).

As shown in Figure **15**, in the first behavior during dehumidification, the open/close dampers for the rear upper left opening (**21**), the rear lower right opening (**24**), the front upper right opening (**32**) and the front lower left opening (**33**) are open but the open/close dampers for the rear upper right opening (**22**), the rear lower left opening (**23**), the front upper left opening (**31**) and the front lower right opening (**34**) are closed.

Therefore, the first air let in the rear upper channel (**65**) flows through the rear upper left opening (**21**) into the upper space of the first channel (**51**). Then, the air flows downward, passes through the first adsorption heat exchanger (**103**) and flows into the lower space of the first channel (**51**). During the time, moisture in the air is adsorbed on the adsorbent of the first adsorption heat exchanger (**103**) acting as an evaporator. Heat of adsorption produced during the time is utilized as heat of evaporation for refrigerant in the first adsorption heat exchanger (**103**).

The first air thus dehumidified by the first adsorption heat exchanger (**103**) flows through the front lower left opening (**33**) into the front lower channel (**68**). Thereafter, the air flows through the intake channel (**42**) and is then supplied through the intake port (**14**) to the room.

On the other hand, the second air let in the front upper channel (**67**) flows through the front upper right opening (**32**) into the lower space of the second channel (**52**). Then, the air flows downward, passes through the second adsorption heat exchanger (**104**) and then flows into the lower space of the second channel (**52**). During the time, the adsorbent on the second adsorption heat exchanger (**104**) acting as a condenser is heated so that moisture adsorbed on the adsorbent is desorbed. Thus, the desorbed moisture is given to the air and the adsorbent on the second adsorption heat exchanger (**104**) is regenerated.

The second air used for regeneration of the adsorbent on the second adsorption heat exchanger (**104**) in the above manner flows through the rear lower right opening (**66**) into the rear lower channel (**66**). Thereafter, the air flows through the exhaust channel (**41**) and is then exhausted through the exhaust port (**16**) to the outside.

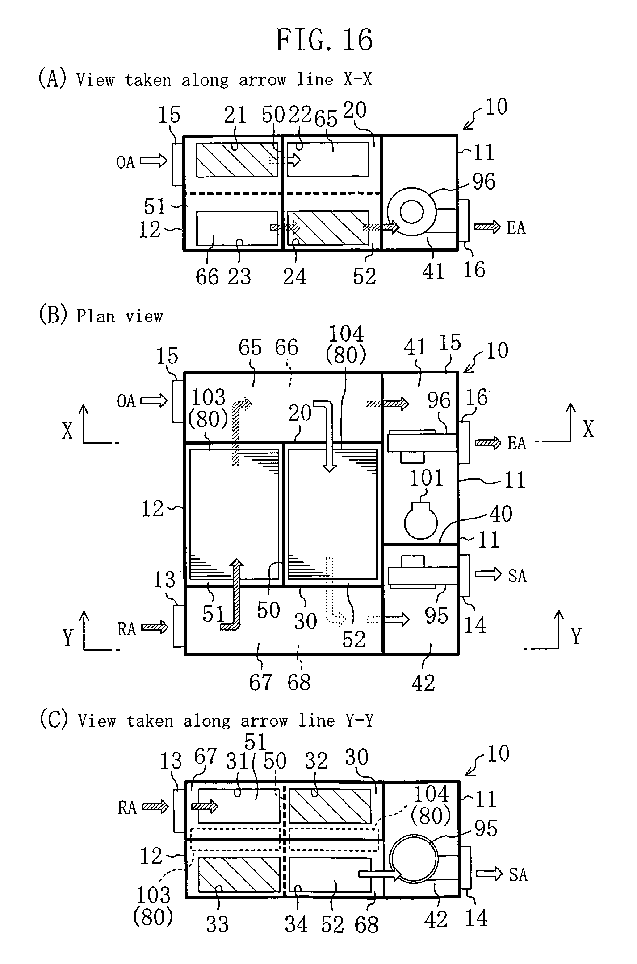

As shown in Figure **16**, in the second behavior during dehumidification, the open/close dampers for the rear upper right opening (**22**), the rear lower left opening (**23**), the front upper left opening (**31**) and the front lower right opening (**34**) are open but the open/close dampers for the rear upper left opening (**21**), the rear lower right opening (**24**), the front upper right opening (**32**) and the front lower left opening (**33**) are closed.

Therefore, the first air let in the rear upper channel (**65**) flows through the rear upper right opening (**22**) into the upper space of the second channel (**52**). The air flows downward, passes through the second adsorption heat exchanger (**104**) and flows into the lower space of the second channel (**52**). During the time, moisture in the air is adsorbed on the adsorbent of the second adsorption heat exchanger (**104**) acting as an evaporator. Heat of adsorption produced during the time is utilized as heat of evaporation for refrigerant in the second adsorption heat exchanger (**104**).

The first air thus dehumidified by the second adsorption heat exchanger (**104**) flows through the front lower right opening (**34**) into the front lower channel (**68**). Thereafter, the air flows through the intake channel (**42**) and is then supplied through the intake port (**14**) to the room.

On the other hand, the second air let in the front upper channel (**67**) flows through the front upper left opening (**31**) into the upper space of the first channel (**51**). Then, the air flows downward, passes through the first adsorption heat exchanger (**103**) and then flows into the lower space of the first channel (**51**). During the time, the adsorbent on the first adsorption heat exchanger (**103**) acting as a condenser is heated so that moisture adsorbed on the adsorbent is desorbed. Thus, the desorbed moisture is given to the air and the adsorbent on the first adsorption heat exchanger (**103**) is regenerated.

The second air used for regeneration of the adsorbent on the first adsorption heat exchanger (**103**) in the above manner flows through the rear lower left opening (**23**) into the rear lower channel (**66**). Thereafter, the air flows through the exhaust channel (**41**) and is then exhausted through the exhaust port (**16**) to the outside.

### <Humidification mode>

In the first behavior during humidification, the refrigerant circuit (**100**) takes the first position (the position shown in Figure **14A**). In this position, the first adsorption heat exchanger (**103**) acts as a condenser and the second adsorption heat exchanger (**104**) acts as an evaporator. In the second behavior, the refrigerant circuit (**100**) takes the second position (the position shown in Figure **14B**). In this position, the first adsorption heat exchanger (**103**) acts as an evaporator and the second adsorption heat exchanger (**104**) acts as a condenser.

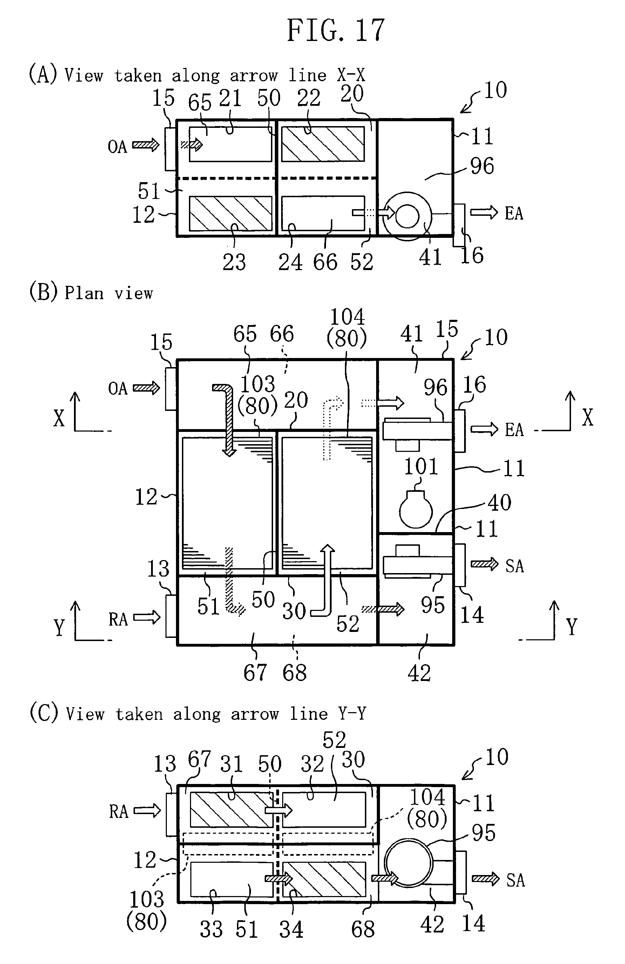

As shown in Figure **17**, when the intake fan (**95**) is driven in the humidification mode, outside air (OA) is taken into the casing (**10**) through the outdoor suction port (**15**). The outside air (OA) flows as a second air into the rear upper channel (**65**). On the other hand, when the exhaust fan (**96**) is driven, room air (RA) is taken into the casing (**10**) through the indoor suction port (**13**). The room air (RA) flows as a first air into the front upper channel (**67**).

As shown in Figure **17**, in the first behavior during humidification, the open/close dampers for the rear upper left opening (**21**), the rear lower right opening (**24**), the front upper right opening (**32**) and the front lower left opening (**33**) are open but the open/close dampers for the rear upper right opening (**22**), the rear lower left opening (**23**), the front upper left opening (**31**) and the front lower right opening (**34**) are closed.

Therefore, the second air let in the rear upper channel (**65**) flows through the rear upper left opening (**21**) into the upper space of the first channel (**41**). Then, the air flows downward, passes through the first adsorption heat exchanger (**103**) and flows into the lower space of the first channel (**41**). During the time, the adsorbent of the first adsorption heat exchanger (**103**) acting as a condenser is heated so that moisture adsorbed on the adsorbent is desorbed. Thus, the desorbed moisture is given to the air.

The second air thus humidified by the first adsorption heat exchanger (**103**) flows through the front lower left opening (**33**) into the front lower channel (**68**). Thereafter, the air flows through the intake channel (**42**) and is then supplied through the intake port (**14**) to the room.

On the other hand, the first air let in the front upper channel (**67**) flows through the front upper right opening (**32**) into the upper space of the second channel (**52**). Then, the air flows downward, passes through the second adsorption heat exchanger (**104**) and then flows into the lower space of the second channel (**52**). During the time, moisture in the air is adsorbed on the adsorbent of the second adsorption heat exchanger (**104**) acting as an evaporator. Heat of adsorption produced during the time is utilized as heat of evaporation for refrigerant in the second adsorption heat exchanger (**104**).

The first air used for regeneration of the adsorbent on the second adsorption heat exchanger (**104**) in the above manner flows through the rear lower right opening (**66**) into the rear lower channel (**66**). Thereafter, the air flows through the exhaust channel (**41**) and is then exhausted through the exhaust port (**16**) to the outside.

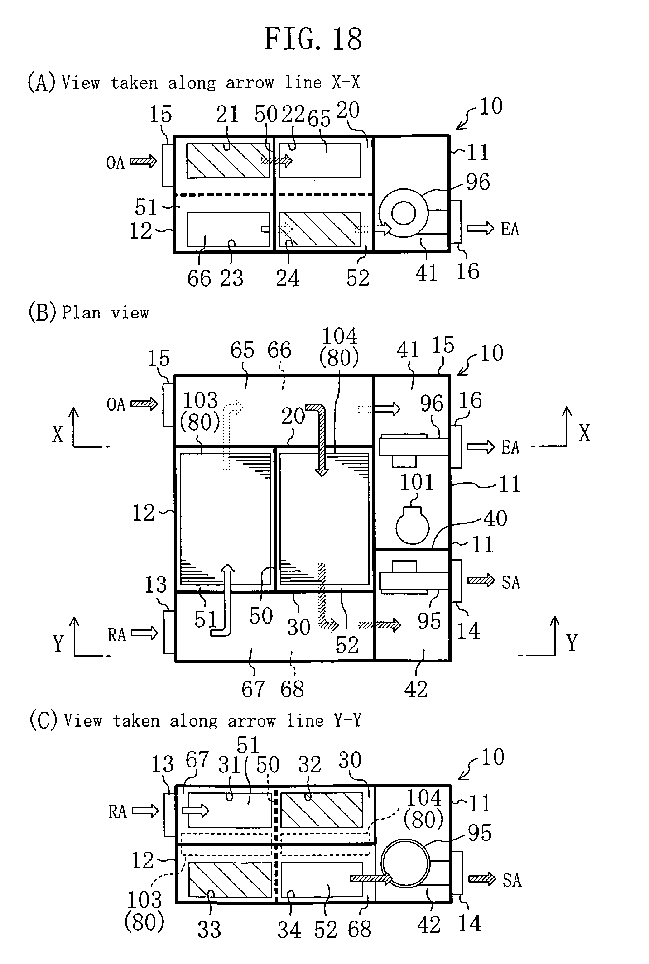

As shown in Figure **18**, in the second behavior during humidification, the open/close dampers for the rear upper right opening (**22**), the rear lower left opening (**23**), the front upper left opening (**31**) and the front lower right opening (**34**) are open but the open/close dampers for the rear upper left opening (**21**), the rear lower right opening (**24**), the front upper right opening (**32**) and the front lower left opening (**33**) are closed.

Therefore, the second air let in the rear upper channel (**65**) flows through the rear upper right opening (**22**) into the upper space of the second channel (**52**). The air flows downward, passes through the second adsorption heat exchanger (**104**) and flows into the lower space of the second channel (**52**). During the time, the adsorbent of the second adsorption heat exchanger (**104**) acting as a condenser is heated so that moisture adsorbed on the adsorbent is desorbed. Thus, the desorbed moisture is given to the air.

The second air thus humidified by the second adsorption heat exchanger (**104**) flows through the front lower right opening (**34**) into the front lower channel (**68**). Thereafter, the air flows through the intake channel (**42**) and is then supplied through the intake port (**14**) to the room.

On the other hand, the first air let in the front upper channel (**67**) flows through the front upper left opening (**31**) into the upper space of the first channel (**51**). Then, the air flows downward, passes through the first adsorption heat exchanger (**103**) and then flows into the lower space of the first channel (**51**). During the time, moisture in the air is adsorbed on the adsorbent of the first adsorption heat exchanger (**103**) acting as an evaporator. Heat of adsorption produced during the time is utilized as heat of evaporation for refrigerant in the first adsorption heat exchanger (**103**). The first air having given moisture to the adsorbent on the first adsorption heat exchanger (**103**) in the above manner flows through the rear lower left opening (**23**) into the rear lower channel (**66**). Thereafter, the air flows through the exhaust channel (**41**) and is then exhausted through the exhaust port (**16**) to the outside.

### ― Effects of Embodiment 2 ―

Since the second embodiment uses as the adsorber (**80**) the first adsorption heat exchanger (**103**) and the second adsorption heat exchanger (**104**), it can perform the aforementioned dehumidification and humidification to switch from one to the other.

When the refrigerant circuit (**106**) uses R32 as the refrigerant (**106**), this provides a larger sensible heat zone (**R**) than R22 as described with reference to Figure **10** to increase the amount of heat used for regeneration of the adsorbent of the first and second adsorption heat exchangers (**103, 104**). This improves the efficiency of thermal regeneration of the first and second adsorption heat exchangers (**103, 104**).

Such improvement in the efficiency of thermal regeneration due to increase in sensible heat zone (**R**) can be provided likewise with the use of an R32-rich mixed refrigerant (a mixed refrigerant containing R32 in the range from 75 weight % inclusive to 100 weight % exclusive.

Further, when the refrigerant circuit (**106**) uses CO2 as the refrigerant (**106**) to operate on a supercritical cycle, this provides a larger sensible heat zone (**R**) than R22 as described with reference to Figure **11** to increase the amount of heat used for regeneration of the adsorbent of the first and second adsorption heat exchangers (**103, 104**). This improves the efficiency of thermal regeneration of the first and second adsorption heat exchangers (**103, 104**).

### <<Other embodiments>>

In the present invention, the above embodiment may have the following configurations.

In the above embodiment, the adsorption elements (**81, 82**) are regenerated by heating it with the second air heated up to approximately 60°C by the regeneration heat exchanger (**102**). The temperature for thermal regeneration, however, is not necessarily limited to 60°C. Depending upon physicochemical properties of an adsorbent used for the adsorption elements (**81, 82**), thermal regeneration of the adsorption elements (**81, 82**) can be implemented by setting the temperature of thermal regeneration at a higher or lower temperature than 60°C. Also in such cases, the efficiency of thermal regeneration of the adsorption elements (**81, 82**) can be improved using the refrigeration cycle of R32 or the supercritical cycle of CO2 which have large sensible heat zones (**R**) effectively acting on thermal regeneration. In the present invention, the first embodiment may have the following configurations.

### Industrial Applicability

As described so far, the present invention is useful in humidity control systems for dehumidifying and humidifying air using an adsorber.

## Claims

1. A humidity control system which includes an adsorber (**80**) for controlling the humidity of air to be processed using an adsorbent and a refrigerant circuit (**100**) for operating on a refrigeration cycle and thermally regenerates the adsorber (**80**) with heat of refrigerant (**106**) in the refrigerant circuit (**100**),
wherein the humidity control system is configured so that the sensible heat zone (**R**) for the refrigerant (**106**) is larger than that for R22 when compared in terms of refrigeration cycles having substantially the same discharge temperature (**B**).

2. The humidity control system of claim 1, wherein the refrigerant circuit (**100**) is configured so that the pressure of the refrigerant (**106**) in the high-pressure side of the refrigeration cycle is higher than the critical pressure of the refrigerant (**106**).

3. The humidity control system of claim 1, wherein the refrigerant (**106**) is a single refrigerant of R32 or a mixed refrigerant containing R32 in the range from 75 weight % inclusive to 100 weight % exclusive.

4. The humidity control system of claim 2, wherein the refrigerant (**106**) is CO2 refrigerant.

5. The humidity control system of claim 1, wherein
the adsorber (**80**) is composed of a first adsorption element (**81**) and a second adsorption element (**82**), and
the humidity control system is configured to run a batch operation consisting of a first behavior in which the first adsorption element (**81**) adsorbs moisture in a first air and the second adsorption element (**82**) is regenerated by heating with a second air heated up by the refrigerant (**106**) in the refrigerant circuit (**100**) and a second behavior in which the second adsorption element (**82**) adsorbs moisture in the first air and the first adsorption element (**81**) is regenerated by heating with the second air heated up by the refrigerant (**106**) in the refrigerant circuit (**100**) by alternately switching between the first and second behaviors.
